(19) Europäisches Patentamt
European Patent Office
Office européen des brevets

(11) EP 4 183 838 A1

(12) EUROPEAN PATENT APPLICATION
published in accordance with Art. 153(4) EPC

(43) Date of publication:
**24.05.2023 Bulletin 2023/21**

(21) Application number: **21846619.1**

(22) Date of filing: **25.06.2021**

(51) International Patent Classification (IPC):
***C08L 101/02*** *(2006.01)* ***C08K 3/04*** *(2006.01)*
***C08K 5/01*** *(2006.01)* ***C08K 7/00*** *(2006.01)*
***C08L 15/00*** *(2006.01)* ***C08L 101/00*** *(2006.01)*

(52) Cooperative Patent Classification (CPC):
**C08K 3/04; C08K 5/01; C08K 7/00; C08L 15/00; C08L 101/00; C08L 101/02**

(86) International application number:
**PCT/JP2021/024187**

(87) International publication number:
**WO 2022/019050 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2020 JP 2020123918**

(71) Applicant: **ENEOS Corporation**
**Chiyoda-ku**
**Tokyo 100-8162 (JP)**

(72) Inventors:
- **CHINO Keisuke**
  **Tokyo 100-8162 (JP)**
- **MATSUO Yusuke**
  **Tokyo 100-8162 (JP)**

(74) Representative: **Müller-Boré & Partner Patentanwälte PartG mbB**
**Friedenheimer Brücke 21**
**80639 München (DE)**

# (54) CONDUCTIVE THERMOPLASTIC ELASTOMER COMPOSITION

(57) A conductive thermoplastic elastomer composition comprising: at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; a paraffin oil; and a branched multi-layered carbon nanotube, wherein a content ratio of the paraffin oil is 1 to 65% by mass relative to a total amount of the composition.

EP 4 183 838 A1

## Description

[Technical Field]

The present invention relates to a conductive thermoplastic elastomer composition.

[Background Art]

Thermoplastic elastomer compositions are materials which are industrially very useful because they can be melted at molding temperatures during the molding process and can be shaped by a known resin molding technique. In recent years, researches on conductive thermoplastic elastomer compositions obtained by providing such thermoplastic elastomer compositions with conductivity have been underway.

As such a conductive thermoplastic elastomer composition, for example, International Publication No. WO2018/096910 (WO 2018/096910 A) (PTL 1) discloses a conductive thermoplastic elastomer composition comprising: at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; a clay; a paraffin oil; and a carbon-based filler having a BET specific surface area of 50 $m^2/g$ or more, wherein a content ratio of the clay is 20 parts by mass or less relative to 100 parts by mass of the elastomer component, and a content ratio of the paraffin oil is 1 to 65% by mass relative to a total amount of the composition. Such a conductive thermoplastic elastomer composition as described in PTL 1 is excellent in resistance to compression set and is usable in various usages.

Note that, although not a composition using a soft elastomer material, Beate Krause et al., "Comparative study of singlewalled, multiwalled, and branched carbon nanotubes melt mixed in different thermoplastic matrices", Polymer, Vol. 159, 2018, 75-89 (NPL 1) discloses a complex in which a thermoplastic matrix such as polypropylene or polycarbonate contains branched multi-layered carbon nanotubes.

[Citation List]

[Patent Literature]

[PTL 1] International Publication No. WO2018/096910

[Non Patent Literature]

[NPL 1] Beate Krause et al., "Comparative study of singlewalled, multiwalled, and branched carbon nanotubes melt mixed in different thermoplastic matrices", Polymer, Vol. 159, 2018, 75-89

[Summary of Invention]

[Technical Problem]

However, the conductive thermoplastic elastomer compositions as described in PTL 1 still have room for improvements in terms of further reducing hysteresis loss and further reducing the temperature dependence of the storage modulus (E'). In addition, NPL 1 only describes techniques related to the blending of carbon nanotubes with hard resins such as PP and PVDF, and does not describe at all the blending of carbon nanotubes with soft elastomer materials.

The present invention has been made in view of the problems in the conventional techniques, and an object of the present invention is to provide a conductive thermoplastic elastomer composition that can have a sufficiently high level of conductivity and higher tensile stress, can reduce hysteresis loss, and also can reduce a temperature dependence of storage modulus.

[Solution to Problem]

The present inventors have conducted intensive study to achieve the above-described object, and consequently have found that a conductive thermoplastic elastomer composition can have a sufficiently high level of conductivity and higher tensile stress, can reduce hysteresis loss, and also can reduce temperature dependence of storage modulus when the composition comprises: an elastomer component described later (at least one selected from the group consisting

of elastomeric polymers (A) described below and elastomeric polymers (B) described below); a paraffin oil; and a branched multi-layered carbon nanotube (a carbon nanotube having a branched structure);, wherein a content ratio of the paraffin oil is 1 to 65% by mass relative to a total amount of the composition. This finding has led to the completion of the present invention.

Specifically, a conductive thermoplastic elastomer composition of the present invention comprises:

at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
a paraffin oil; and
a branched multi-layered carbon nanotube, wherein
a content ratio of the paraffin oil is 1 to 65% by mass relative to a total amount of the composition.

In the above conductive thermoplastic elastomer composition of the present invention, a content ratio of the branched multi-layered carbon nanotube is preferably 0.1 to 50% by mass relative to the total amount of the composition.

[Advantageous Effects of Invention]

The present invention makes it possible to provide a conductive thermoplastic elastomer composition that can have a sufficiently high level of conductivity and higher tensile stress, can reduce hysteresis loss, and also can reduce temperature dependence of storage modulus.

[Description of Embodiments]

Hereinafter, the present invention will be described in detail based on preferred embodiments thereof.

A conductive thermoplastic elastomer composition of the present invention comprises:

at least one elastomer component selected from the group consisting of elastomeric polymers (A) each of which has a side chain (a) containing a hydrogen-bond cross-linkable moiety having a carbonyl-containing group and/or a nitrogen-containing heterocycle, and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
a paraffin oil; and
a branched multi-layered carbon nanotube, wherein
a content ratio of the paraffin oil is 1 to 65% by mass relative to a total amount of the composition.

Here, first, separate description is provided for each of the components contained in the conductive thermoplastic elastomer composition of the present invention.

(Elastomer Component)

The elastomer component is at least one selected from the group consisting of the above-described elastomeric polymers (A) and (B). In each of the elastomeric polymers (A) and (B), the "side chain" refers to a side chain and a terminal of the elastomeric polymer. In addition, "a side chain (a) containing a hydrogen-bond cross-linkable moiety having a carbonyl-containing group and/or a nitrogen-containing heterocycle" means that a carbonyl-containing group and/or a nitrogen-containing heterocycle (more preferably a carbonyl-containing group and a nitrogen-containing heterocycle) serving as a hydrogen-bond cross-linkable moiety is chemically stably bonded (covalently bonded) to an atom (generally, a carbon atom) forming a main chain of the elastomeric polymer. In addition, the "containing a hydrogen-bond cross-linkable moiety and a covalent-bond cross-linking moiety in a side chain" is a concept including a case where side chains of both a side chain having a hydrogen-bond cross-linkable moiety (hereinafter, sometimes referred to as "side chain (a')" for convenience) and a side chain having a covalent-bond cross-linking moiety (hereinafter, sometimes referred to as "side chain (b)" for convenience) are contained, so that the side chains of the polymer contain both a hydrogen-bond cross-linkable moiety and a covalent-bond cross-linking moiety, as well as a case where a side chain having both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as "side chain (c)" for convenience) is contained, so that the side chain of the

polymer contain both a hydrogen-bond cross-linkable moiety and a covalent-bond cross-linking moiety. Note that such an elastomer component has the same definition as the elastomer component described in Japanese Patent No. 5918878 (JP 5918878 B), and those described in paragraph [0032] to paragraph [0145] of JP 5918878 B can be preferably used.

The main chain (polymer forming a main chain portion) of each of the elastomeric polymers (A) and (B) may be generally a known natural polymer or a synthetic polymer, wherein the polymer has a glass-transition point of room temperature (25°C) or lower (the main chain may be a so-called elastomer), and is not particularly limited. As the main chains (polymers forming main chain portions) of the elastomeric polymers (A) and (B), known polymers each having a glass-transition point of room temperature (25°C) or below (for example, those described in paragraphs [0033] to [0036] of JP 5918878 B) can be preferably used.

The main chains of the elastomeric polymers (A) and (B) are each preferably at least one selected from diene-based rubbers, hydrogenated products of diene-based rubbers, olefin-based rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers. In addition, the main chains of the elastomeric polymers (A) and (B) are each preferably a hydrogenated product of a diene-based rubber or an olefin-based rubber from the viewpoint of the absence of a double bond susceptible to aging, and preferably a diene-based rubber from the viewpoints of the low cost and the high reactivity (the presence of many double bonds capable of an ene reaction with a compound such as maleic anhydride). In addition, when an olefin-based rubber is used as the main chain of each of the elastomeric polymers (A) and (B), degradation of the composition tends to be suppressed more sufficiently because of the absence of double bonds. Moreover, the main chain of each of the elastomeric polymers (A) and (B) is more preferably an ethylene-vinyl acetate copolymer because it can lower the hardness of the obtained composition and can increase the dispersibility of the branched multi-layered carbon nanotubes to be contained in the composition.

In addition, as the elastomer component, one of the elastomeric polymers (A) and (B) may be used alone, or a mixture of two or more thereof may be used. In addition, the glass-transition points of the elastomeric polymers (A) and (B) are 25°C or below as described above. By making the glass-transition point 25°C or below, it is possible to add a higher flexibility in a normal operation temperature range (room temperature (25°C) or more). Note that the "glass-transition point" in the present invention is a glass-transition point measured by differential scanning calorimetry (DSC). For the measurement of the glass-transition points, the rate of temperature rise is preferably 10°C/min. In addition, the elastomeric polymers (A) and (B) exhibit rubber-like elasticity at room temperature (around 25°C).

In addition, as described above, the above-described elastomeric polymers (A) and (B) have, as a side chain, at least one of a side chain (a) containing a hydrogen-bond cross-linkable moiety having a carbonyl-containing group and/or a nitrogen-containing heterocycle; a side chain (a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety. Note that, in the present invention, the side chain (c) can also be regarded as a side chain functioning as a side chain (a') and also as a side chain (b). Each of the side chains is described below.

<Side Chain (a'): Side Chain Containing Hydrogen-bond cross-linkable moiety>

The side chain (a') containing a hydrogen-bond cross-linkable moiety may be any, and the structure thereof is not particularly limited, as long as the side chain has a group that can form a cross-linkage by a hydrogen bond (for example, a hydroxy group, a hydrogen-bond cross-linkable moiety contained in the side chain (a) described later, or the like), and forms a hydrogen bond on the basis of the group. Here, the hydrogen-bond cross-linkable moiety is a moiety through which polymer molecules (elastomer molecules) are cross-linked by a hydrogen bond. Note that the cross-linkage by a hydrogen bond is formed only when there are a hydrogen acceptor (a group containing an atom containing lone pair electrons, or the like) and a hydrogen donor (a group having a hydrogen atom covalently bonded to an atom having a high electronegativity, or the like). Hence, when both a hydrogen acceptor and a hydrogen donor are not present in side chains of elastomer molecules, no cross-linkage by a hydrogen bond is formed. For this reason, only when both a hydrogen acceptor and a hydrogen donor are present in side chains of elastomer molecules, a hydrogen-bond cross-linkable moiety can be considered to be present in the system. Note that, in the present invention, if both a portion that can functions as a hydrogen acceptor (for example, a carbonyl group or the like) and a portion that can functions as a hydrogen donor (for example, a hydroxy group or the like) are present in side chains of elastomer molecules, the portion that can functions as a hydrogen acceptor and the portion that can functions as a donor of the side chains are considered to be hydrogen-bond cross-linkable moieties.

The hydrogen-bond cross-linkable moiety in such a side chain (a') is more preferably the side chain (a) described later from the viewpoints of the formation of a stronger hydrogen bond and the like. Moreover, from the same viewpoints, the hydrogen-bond cross-linkable moiety in the side chain (a') is more preferably a hydrogen-bond cross-linkable moiety having a carbonyl-containing group and a nitrogen-containing heterocycle.

<Side Chain (a): Side Chain Containing Hydrogen-bond Cross-linkable Moiety Having Carbonyl-containing Group and/or Nitrogen-containing Heterocycle>

The side chain (a) containing a hydrogen-bond cross-linkable moiety having a carbonyl-containing group and/or a nitrogen-containing heterocycle may be any, as long as the side chain has a carbonyl-containing group and/or a nitrogen-containing heterocycle, and the other aspects of the structure are not particularly limited. The hydrogen-bond cross-linkable moiety is more preferably a hydrogen-bond cross-linkable moiety having a carbonyl-containing group and a nitrogen-containing heterocycle.

The carbonyl-containing group is not particularly limited as long as the group contains a carbonyl group. Specific examples of the carbonyl-containing group includes amides, esters, imides, carboxy groups, carbonyl groups, acid anhydride groups, and the like. The carbonyl-containing group may be a group introduced to the main chain (the polymer of the main chain portion) by using a compound capable of introducing a carbonyl-containing group to the main chain. The compound capable of introducing a carbonyl-containing group to the main chain is not particularly limited, and specific examples thereof include ketones, carboxylic acids, derivatives thereof, and the like. Note that as the compound capable of introducing a carbonyl-containing group to the main chain, such as a carboxylic acid, a derivative thereof, or the like, a known compound (for example, those described in paragraphs [0051] to [0053] of JP 5918878 B, or the like) can be used as appropriate. In addition, such a compound capable of introducing a carbonyl group (carbonyl-containing group) is preferably a cyclic acid anhydride such as succinic anhydride, maleic anhydride, glutaric anhydride, or phthalic anhydride, and is particularly preferably maleic anhydride.

In addition, when the side chain (a) has a nitrogen-containing heterocycle, the structure or the like of the nitrogen-containing heterocycle is not particularly limited, as long as the nitrogen-containing heterocycle is introduced to the main chain directly or through an organic group. It is also possible to use, as the nitrogen-containing heterocycle, one containing a heteroatom other than a nitrogen atom, such as a sulfur atom, an oxygen atom, or a phosphorus atom, for example, in the heterocycle, as long as a nitrogen atom is contained in the heterocycle. Here, the use of a nitrogen-containing heterocycle in the side chain (a) is preferable because the presence of the heterocyclic structure results in a stronger hydrogen bond forming the cross-linkage, so that the obtained thermoplastic elastomer composition of the present invention has an improved tensile strength. Note that as such a nitrogen-containing heterocycle, a known one (for example, those described in paragraphs [0054] to [0067] of JP 5918878 B, or the like) can be used as appropriate. Note that such a nitrogen-containing heterocycle may have a substituent.

Such a nitrogen-containing heterocycle is preferably at least one selected from a triazole ring, an isocyanurate ring, a thiadiazole ring, a pyridine ring, an imidazole ring, a triazine ring, and a hydantoin ring each of which may have a substituent, and is preferably at least one selected from a triazole ring, a thiadiazole ring, a pyridine ring, an imidazole ring and a hydantoin ring each of which may have a substituent, because the obtained composition is excellent in recyclability, compression set, hardness, and mechanical strength, especially tensile strength. The substituent which may be possessed by the nitrogen-containing heterocycle includes, for example, a hydroxy group, a thiol group, an amino group, a carboxy group, an isocyanate group, an epoxy group, an alkoxysilyl group, and the like.

In addition, when the side chain (a) contains both the above-described carbonyl-containing group and the above-described nitrogen-containing heterocycle, the above-described carbonyl-containing group and the above-described nitrogen-containing heterocycle may be introduced to the main chain as side chains independent from each other, but are preferably introduced to the main chain as a single side chain in which the above carbonyl-containing group and the above nitrogen-containing heterocycle are linked to each other through another group. The structure of the side chain (a) may be a structure as described in paragraphs [0068] to [0081] of JP 5918878 B, for example.

In addition, the side chain (a) is preferably a side chain (a) introduced as a side chain of a polymer by using, as a polymer (an elastomeric polymer-forming material) which forms the main chain after reaction, a polymer (an elastomeric polymer having a cyclic acid anhydride group in a side chain) having a cyclic acid anhydride group (more preferably a maleic anhydride group) as a functional group, and reacting the functional group (the cyclic acid anhydride group) with a compound which forms a hydrogen-bond cross-linkable moiety (a compound capable of introducing a nitrogen-containing heterocycle) upon reaction with the cyclic acid anhydride group, to form a hydrogen-bond cross-linkable moiety. The compound which forms a hydrogen-bond cross-linkable moiety (the compound capable of introducing a nitrogen-containing heterocycle) may be the above nitrogen-containing heterocycle itself, or may be a nitrogen-containing heterocycle having a substituent (for example, a hydroxy group, a thiol group, an amino group, or the like) which reacts with a cyclic acid anhydride group such as maleic anhydride.

<Side Chain (b): Side Chain Containing Covalent-Bond Cross-Linking Moiety>

In the Specification, the "side chain (b) containing a covalent-bond cross-linking moiety" means a side chain having a moiety which cross-links molecules of the polymer forming the main chain through covalent bonding (a covalent-bond cross-linking moiety: for example, when a polymer having a functional group (a polymer which forms the main

chain after reaction) is used as a raw material, a moiety which cross-links the polymer molecules through a chemically stable bond (covalent bond) such as at least one bond selected from the group consisting of amide, ester, and thioester, which can be formed by reacting the functional group possessed by the polymer and a compound which forms a covalent-bond cross-linking moiety (a compound which forms covalent bond). As described above, the "covalent-bond cross-linking moiety" is a moiety which cross-links polymer molecules (elastomer molecules) through a covalent bond. Note that although the side chain (b) is a side chain containing a covalent-bond cross-linking moiety, when the side chain (b) has a covalent-bonding moiety and also has a group capable of forming a hydrogen bond to form cross-linkage through the hydrogen bonds between the side chains, the side chain is used as a side chain (c) described later (Note that when both of a hydrogen donor and a hydrogen acceptor which are capable of forming a hydrogen bond between side chains of elastomer molecules are not contained, for example, when only side chains each of which contains only an ester group (-COO-) in the system is present, particularly a hydrogen bond is not formed between the ester groups (-COO-), and thus such a group does not function as the hydrogen-bond cross-linkable moiety. Meanwhile, for example, when side chains of elastomer molecules each contain a structure having a moiety that function as a hydrogen donor and a moiety that functions as a hydrogen acceptor for a hydrogen bond such as a carboxy group or a triazole ring, a hydrogen bond is formed between the side chains of the elastomer molecules, and thus the side chains are each considered to contain a hydrogen-bond cross-linkable moiety. In addition, for example, when an ester group and a hydroxy group coexist between side chains of elastomer molecules, and a hydrogen bond is formed by these groups between the side chains, the moiety which forms the hydrogen bond functions as a hydrogen-bond cross-linkable moiety. For this reason, the side chain (b) is sometimes used as the side chain (c) depending on the structure itself possessed by the side chain (b), the types of a structure possessed by the side chain (b) and a substituent possessed by another side chain, and the like).

The side chain (b) containing a covalent-bond cross-linking moiety is not particularly limited, but is preferably, for example, one containing a covalent-bond cross-linking moiety formed by a reaction of an elastomeric polymer having a functional group in a side chain (the polymer for forming a main chain portion) with a compound that forms a covalent-bond cross-linking moiety upon a reaction with the functional group (a compound that forms a covalent bond). The cross-linkage at the covalent-bond cross-linking moiety of the side chain (b) is preferably formed by at least one bond selected from the group consisting of amide, ester, lactone, urethane, urea, ether, thiourethane, and thioether. For this reason, the functional group possessed by the polymer for forming the main chain portion (hereinafter, sometimes referred to as a "polymer constituting the main chain") is preferably a functional group capable of forming at least one bond selected from the group consisting of amide, ester, lactone, urethane, urea, ether, thiourethane, and thioether.

The "compound that forms a covalent-bond cross-linking moiety (the compound that forms a covalent bond)" includes, for example, polyamine compounds having two or more amino groups and/or imino groups in one molecule (when both amino group and imino group are present, the total number of these groups is two or more); polyol compounds having two or more hydroxy groups in one molecule; polyisocyanate compounds having two or more isocyanate (NCO) groups in one molecule; polythiol compounds having two or more thiol groups (mercapto groups) in one molecule; and the like. The "compound that forms a covalent-bond cross-linking moiety (the compound that forms a covalent bond)" mentioned herein can be a compound capable of introducing both the hydrogen-bond cross-linkable moiety and the covalent-bond cross-linking moiety depending on the type of the substituent contained in the compound, the degree of the progress of reaction in a case where the reaction is carried out by using such compound, or the like (for example, when a covalent bond cross-linking moiety is formed by using a compound having three or more hydroxy groups, two of the hydroxy groups react with a functional group of the elastomeric polymer having the functional group in the side chains, and the remaining one hydroxy group is left as a hydroxy group in some cases depending on the degree of the progress of the reaction, and in this case, a moiety that can form a hydrogen-bond cross-linkage can also be introduced). For this reason, the examples of the "compound that forms a covalent-bond cross-linking moiety (compound that form a covalent bond)" listed herein also include a "compound that forms both a hydrogen-bond cross-linkable moiety and a covalent-bond cross-linking moiety". From such a viewpoint, in the case of forming the side chain (b), the side chain (b) may be formed by selecting a compound from the "compound that forms a covalent-bond cross-linking moiety (compound that forms a covalent bond)" as appropriate according to an intended design, controlling the degree of the progress of the reaction, as appropriate, or doing the like. Note that when the compound that forms a covalent-bond cross-linking moiety has a heterocycle, it is possible to also simultaneously produce a hydrogen-bond cross-linkable moiety more efficiently, and it is possible to efficiently form a side chain having a covalent-bond cross-linking moiety as the side chain (c) described later. For this reason, specific examples of the compound having a heterocycle are described especially together with the side chain (c) as preferred compounds for producing the side chain (c). Note that because of its structure, the side chain (c) can also be regarded as a preferred mode of side chains such as the side chain (a) and the side chain (b).

As the polyamine compounds, the polyol compounds, the polyisocyanate compounds, and the polythiol compounds usable as the compound that forms a covalent-bond cross-linking moiety (compound that forms a covalent bond)", known compounds (for example, the compounds described in paragraphs [0094] to [0106] of JP 5918878 B, or the like) can be used as appropriate.

In addition, the "compound that forms a covalent-bond cross-linking moiety (compound that forms a covalent bond)" is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), or polypropylene glycol stearylamine (for example, N,N-bis(2-methyl-2-hydroxyethyl)stearylamine).

The functional group which is contained in the polymer constituting the main chain, and which reacts with the "compound that forms a covalent-bond cross-linking moiety (compound that forms a covalent bond)" is preferably a functional group which can create (generate: form) at least one bond selected from the group consisting of amide, ester, lactone, urethane, urea, thiourethane, and thioether, and preferred examples of such functional group include cyclic acid anhydride groups, hydroxy groups, amino groups, carboxy groups, isocyanate groups, thiol groups, and the like.

<Side Chain (c): Side Chain Containing Both Hydrogen-Bond Cross-Linkable Moiety and Covalent-Bond Cross-Linking Moiety>

The side chain (c) contains both a hydrogen-bond cross-linkable moiety and a covalent-bond cross-linking moiety in a single side chain. The hydrogen-bond cross-linkable moiety contained in the side chain (c) is the same as the hydrogen-bond cross-linkable moiety described for the side chain (a'), and preferred ones thereof are the same as those for the hydrogen-bond cross-linkable moiety in the side chain (a). In addition, as the covalent-bond cross-linking moiety contained in the side chain (c), the same covalent-bond cross-linking moiety as that in the side chain (b) can be used (the same cross-linkages can be used as preferred cross-linkage thereof).

The side chain (c) is preferably one formed by a reaction of an elastomeric polymer having a functional group in a side chain (the polymer for forming a main chain portion) with a compound that forms both a hydrogen-bond cross-linkable moiety and a covalent-bond cross-linking moiety upon a reaction with the functional group (a compound that introduces both a hydrogen-bond cross-linkable moiety and a covalent-bond cross-linking moiety).

The compound that forms both a hydrogen-bond cross-linkable moiety and a covalent-bond cross-linking moiety (the compound that introduces both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (a compound that forms a covalent bond), and, especially, the compound is more preferably a heterocycle-containing polyol, a heterocycle-containing polyamine, a heterocycle-containing polythiol, or the like. Note that as such heterocycle-containing polyols, polyamines, and polythiols, it is possible to use, as appropriate, the same polyol compounds, polyamine compounds, and polythiol compounds described in the above-described "compound capable of forming a covalent-bond cross-linking moiety (compound that forms a covalent bond)" except that a heterocycle (particularly preferably, a nitrogen-containing heterocycle) is present. In addition, as the heterocycle-containing polyols, polyamines, and polythiols, a known one (for example, those described in paragraph [0113] of JP 5918878 B) can be used as appropriate. Note that the functional group that is possessed by the polymer constituting the main chain and that reacts with the "compound that forms both a hydrogen-bond cross-linkable moiety and a covalent-bond cross-linking moiety (the compound that introduces both a hydrogen-bond cross-linkable moiety and a covalent-bond cross-linking moiety)" is preferably a functional group which can create (generate: form) at least one bond selected from the group consisting of amide, ester, lactone, urethane, urea, thiourethane, and thioether, and preferred examples of such a functional group include a cyclic acid anhydride group, a hydroxy group, an amino group, a carboxy group, an isocyanate group, a thiol group, and the like.

(Regarding Structures Preferred as Covalent-Bond Cross-Linking Moieties in Side Chains (b) and (c))

Regarding the side chain (b) and/or (c), it is preferable that the cross-linkage at the covalent-bond cross-linking moiety contain a tertiary amino bond (-N=) and/or an ester bond (-COO-), and these binding moieties function also as hydrogen-bond cross-linkable moieties, from the viewpoint that the compression set and the mechanical strength (elongation at break and tensile strength at break) of the obtained composition are improved to higher levels. When a tertiary amino bond (-N=) or an ester bond (-COO-) in a side chain having a covalent-bond cross-linking moiety forms a hydrogen bond with another side chain as described above, the covalent-bond cross-linking moiety containing the tertiary amino bond (-N=) or the ester bond (-COO-) also comprises a hydrogen-bond cross-linkable moiety, and can function as the side chain (c).

Preferred examples of the compound that can form a covalent-bond cross-linking moiety containing the tertiary amino bond and/or the ester bond upon reaction with a functional group of the polymer constituting the main chain (compound capable of forming both a hydrogen-bond cross-linkable moiety and a covalent-bond cross-linking moiety) include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), polypropylene glycol stearylamine (for example, N,N-bis(2-methyl-2-hydroxyethyl)stearylamine).

The cross-linkage at the covalent-bond cross-linking moiety in the side chain (b) and/or the side chain (c) is preferably one containing at least one structure represented by any of the following general formulae (1) to (3), and is more preferably one in which G in the formulae contains a tertiary amino bond or an ester bond (note that when a structure shown below contains a hydrogen-bond cross-linkable moiety, the side chain having the structure is used as the side chain (c)).

[Chem. 1]

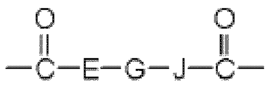
(1)

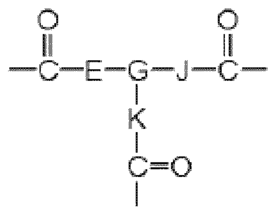
(2)

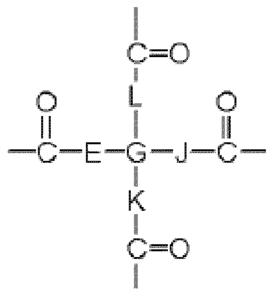
(3)

In the above-described general formulae (1) to (3), E, J, K, and L are each independently a single bond; an oxygen atom, an amino group NR' (where R' is a hydrogen atom or an alkyl group having 1 to 10 carbon atoms), or a sulfur atom; or an organic group optionally containing any of the atoms or groups, and G is a linear, branched, or cyclic hydrocarbon group having 1 to 20 carbon atoms and optionally containing an oxygen atom, a sulfur atom, or a nitrogen atom.

The substituent G is preferably a group represented by any of the following general formulae (111) to (114), and is more preferably the group represented by the following general formula (111) or the group represented by the following general formula (112) from the viewpoint that the heat resistance is high, and the strength is high because of a hydrogen bond.

[Chem. 2]

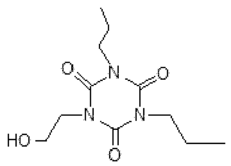
(111)

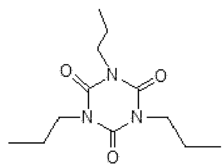
(112)

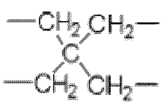
(113)

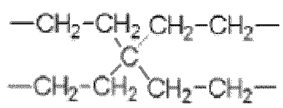
(114)

In addition, in the side chains (b) and (c), the cross-linkage at the covalent-bond cross-linking moiety is preferably formed by reaction between a cyclic acid anhydride group and a hydroxy group or an amino group and/or an imino group. For example, when the polymer forming the main chain portion after reaction has a cyclic acid anhydride group (for example, a maleic anhydride group) as a functional group, the cross-linkage may be a cross-linkage formed by reacting the cyclic acid anhydride group of the polymer with the compound that forms a covalent-bond cross-linking moiety (compound that forms a covalent bond) and that contains a hydroxy group or an amino group and/or an imino group to form a portion cross-linking through covalent bond to cross-link polymers molecules.

In addition, the cross-linkage at the covalent-bond cross-linking moiety in the side chains (b) and (c) is more preferably formed by at least one bond selected from the group consisting of amide, ester, lactone, urethane, urea, ether, thiourethane, and thioether.

Hereinabove, the side chain (a'), the side chain (a), the side chain (b), and the side chain (c) are described. The groups (structures) and the like of the side chains in the polymers can be identified by ordinarily used analytic techniques such as NMR and IR spectrometry.

In addition, the elastomeric polymer (A) is an elastomeric polymer which has the side chain (a) and has a glass-transition point of 25°C or below, whereas the elastomeric polymer (B) is an elastomeric polymer which contains a hydrogen-bond cross-linkable moiety and a covalent-bond cross-linking moiety in a side chain and has a glass-transition point of 25°C or below (a polymer having both the side chain (a') and the side chain (b) as side chains, or a polymer containing at least one side chain (c) in a side chain, or the like). As the elastomer component, one of the elastomeric polymers (A) and (B) may be used alone, or a mixture of two or more thereof may be used.

Note that the elastomeric polymer (B) may be either a polymer having both a side chain (a') and a side chain (b), or a polymer having a side chain (c). From the viewpoint that a stronger hydrogen bond is formed, the hydrogen-bond cross-linkable moiety contained in the side chain of the elastomeric polymer (B) is preferably a hydrogen-bond cross-linkable moiety having a carbonyl-containing group and/or a nitrogen-containing heterocycle (more preferably a hydrogen-bond cross-linkable moiety having a carbonyl-containing group and a nitrogen-containing heterocycle). In addition, the cross-linkage at the covalent-bond cross-linking moiety contained in the side chain of the elastomeric polymer (B) is preferably formed by at least one bond selected from the group consisting of amide, ester, lactone, urethane, urea, ether, thiourethane, and thioether, from the viewpoint that it also becomes possible to cause molecular interaction of a hydrogen bond or the like between side chains containing the cross-linkable portions.

The method for producing such an elastomeric polymers (A) and (B) is not particularly limited, but a known method (for example, the method described in JP 5918878 B (the method described in paragraphs [0139] to [0140], or the like)) can be employed as appropriate. In addition, as the method for producing the elastomeric polymers (A) and (B), it is possible to employ, for example, a method in which an elastomeric polymer having a functional group (for example, a cyclic acid anhydride group, or the like) in a side chain is used, and the elastomeric polymer is reacted with at least one raw material compound of a compound that forms a hydrogen-bond cross-linkable moiety upon a reaction with the functional group, and a mixed raw material of a compound that forms a hydrogen-bond cross-linkable moiety upon a reaction with the functional group and a compound that forms a covalent-bond cross-linking moiety that upon a reaction with the functional group, to produce an elastomeric polymer having the side chain (a); an elastomeric polymer having the side chain (a') and the side chain (b); and/or an elastomeric polymer having the side chain (c) (the elastomeric polymers (A) and (B)). Note that conditions (temperature condition, atmosphere conditions, or the like) employed for the reaction are not particularly limited, and may be set, as appropriate, according to the types of the functional group and the compound to be reacted with the functional group (compound that forms a hydrogen-bond cross-linkable moiety and/or a compound that forms a covalent-bond cross-linking moiety). Note that the elastomeric polymer (A) may also be produced by polymerization of a monomer having a hydrogen bonding moiety.

The elastomeric polymer having such a functional group (for example, a cyclic acid anhydride group) in a side chain is preferably a polymer that can form a main chain of the above-described elastomeric polymers (A) and (B) and has a functional group in a side chain. Here, the "elastomeric polymer containing a functional group in a side chain" refers to an elastomeric polymer having a functional group (the above-described functional group or the like, for example, a cyclic acid anhydride group or the like) chemically stably bonded (covalently bonded) to an atom forming a main chain, and it is possible to preferably use one obtained by a reaction of an elastomeric polymer (for example, a known natural polymer or synthetic polymer) with a compound capable of introducing a functional group.

In addition, the functional group is preferably a functional group capable of forming at least one bond selected from the group consisting of amide, ester, lactone, urethane, urea, ether, thiourethane, and thioether, among which a cyclic acid anhydride group, a hydroxy group, an amino group, a carboxy group, an isocyanate group, a thiol group, or the like is preferable, and a cyclic acid anhydride group is particularly preferable. In addition, the cyclic acid anhydride group is preferably a succinic anhydride group, a maleic anhydride group, a glutaric anhydride group, or a phthalic anhydride group, and is more preferably a maleic anhydride group from the viewpoint that it can be easily introduced to a side chain of a polymer and can be easily obtained industrially. In addition, when the functional group is a cyclic acid anhydride group, the functional group may be introduced to the elastomeric polymer (for example, a known natural polymer or synthetic polymer) by using, for example, a cyclic acid anhydride such as succinic anhydride, maleic anhydride, glutaric anhydride, phthalic anhydride, and a derivative thereof, as the compound capable of introducing a functional group.

In addition, the at least one elastomer component selected from the group consisting of the elastomeric polymers (A) and (B) is preferably at least one selected from the group consisting of reaction products of

an elastomeric polymer having a cyclic acid anhydride group in a side chain (more preferably, a maleic anhydride-modified elastomeric polymer); and

at least one compound (hereinafter, simply referred to as "compound (X)" in some cases) among triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, 2,4-diamino-6-phenyl-1,3,5-triazine, pentaerythritol, sulfamides, and polyether polyols, from the viewpoint that the elastomer component can easily be obtained industrially and further can have high levels of mechanical strength and compression set in a well-balanced manner. As described above, the elastomeric polymers (A) and (B) are each preferably a reaction product of an elastomeric polymer having a cyclic acid anhydride group in a side chain (more preferably, a maleic anhydride-modified elastomeric polymer) with the compound (X). Note that as the compound (X), pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, 2,4-diamino-6-phenyl-1,3,5-triazine, pentaerythritol, sulfamides, and polyether polyols are more preferable from the viewpoint that it is possible to generate a covalent-bond cross-linking moiety and simultaneously to generate a hydrogen-bond cross-linkable moiety.

Note that, the present inventors speculate that, when an elastomer component containing a covalent-bond cross-linking moiety in a side chain is contained in the present invention (for example, when the elastomeric polymer (B) is contained), the side chains containing the covalent-bond cross-linking moieties make it possible to express a higher level of resistance to compression set. Moreover, when the hydrogen-bond cross-linkable moiety and the covalent-bond cross-linking moiety are present in the elastomer component (such as cases where: the elastomeric polymer (B) is contained, a mixture of the elastomeric polymer (B) with another elastomeric polymer is contained; a mixture of the elastomeric polymer (A) and the elastomeric polymer (B) is contained; and a mixture of the elastomeric polymer (A) with an elastomeric polymer containing the side chain (b) other than the elastomeric polymer (B) is used), the presence of the hydrogen-bond cross-linkable moiety and the covalent-bond cross-linking moiety enables the obtained composition to simultaneously express a higher level of mechanical strength attributed to covalent bonds during use and a higher level of flowability (formability) attributed to cleavage of hydrogen bonds during heating. The present inventors speculate that, by taking advantage of the above, properties required depending on an application can be exhibited, as appropriate, by changing, as appropriate, the constitution according to the type of a side chain. Note that, the above-described elastomeric polymer having a side chain (b) other than the elastomeric polymer (B) can be obtained by a method in which an elastomeric polymer having a functional group (for example, a cyclic acid anhydride group) in a side chain is used, and the elastomeric polymer is reacted with a compound that forms a covalent-bond cross-linking moiety upon a reaction with the functional group (compound that forms a covalent bond) to produce the elastomeric polymer having the side chain (b). Note that, also in this case, the above-described "compound that forms a covalent-bond cross-linking moiety (compound that forms a covalent bond)" can be used as the compound that forms a covalent-bond cross-linking moiety (compound that forms a covalent bond).

As described above, it also is possible to impart properties depending on the application to the obtained composition as appropriate in accordance with the type of the elastomer component. For example, when the elastomeric polymer (A) is used as the elastomer component, since more properties stemming from the side chain (a) can be imparted to the composition, it is possible to further improve the elongation at break, the tensile strength at break, and the flowability in particular. In addition, when the elastomeric polymer (B) is used as the elastomer component, since more properties stemming from the covalent-bond cross-linking moiety in the side chain can be imparted to the composition, it is possible to further improve the resistance to compression set in particular. Note that when the elastomeric polymer (B) is contained as the elastomer component, since properties stemming from the hydrogen-bond cross-linkable moiety (hydrogen-bond cross-linkable moiety described in the side chain (a')) can be imparted to the composition besides the properties stemming from the covalent-bond cross-linking moiety, it also is possible to further improve the resistance to compression set while keeping the flowability (formability). Thus, it is possible to even more efficiently exhibit properties desired for the application by changing the type of the side chain, the type of the polymer (B), and so on, as appropriate.

(Paraffin Oil)

The conductive thermoplastic elastomer composition of the present invention comprises a paraffin oil. Incorporating the paraffin oil into the composition in this way makes it possible to reduce the hardness and improve the flowability. The paraffin oil is not particularly limited, and a known paraffin oil can be used as appropriate.

When such a paraffin oil is subjected to a correlation ring analysis (n-d-M ring analysis) according to ASTM D3238-85 to obtain a percentage of the number of paraffin's carbon atoms to the total number of carbon atoms (paraffin

part: $C_P$), and a percentage of the number of naphthene's carbon atoms to the total number of carbon atoms (naphthene part: $C_N$), and a percentage of the number of aromatic carbon atoms to the total number of carbon atoms (aromatic part: $C_A$), it is preferable that the paraffin oil have 60% or more as the percentage of the number of paraffin's carbon atoms to the total number of carbon atoms ($C_P$).

Moreover, in the conductive thermoplastic elastomer composition of the present invention, the paraffin oil is one having a kinematic viscosity at 40°C measured according to JIS K 2283 (published in 2000) of preferably 5 $mm^2/s$ to 1000 $mm^2/s$, more preferably 10 to 700 $mm^2/s$, and further preferably 30 to 500 $mm^2/s$. If the kinematic viscosity (v) is less than the lower limit, oil bleeding tends to occur. Meanwhile, if the kinematic viscosity (v) is more than the upper limit, sufficient flowability tends not to be imparted. Note that as the kinematic viscosity of the paraffin oil, a value is employed which is measured under a temperature condition of 40°C according to JIS K 2283 (published in 2000). For example, a value may be employed which is automatically measured under a temperature condition of 40°C by using a Cannon-Fenske Viscometer (for example, one manufactured by SIBATA SCIENTIFIC TECHNOLOGY LTD. under the trade name of "SO series") according to JIS K 2283 (published in 2000).

Further, in the conductive thermoplastic elastomer composition of the present invention, the paraffin oil has an aniline point measured by a U-tube method according to JIS K 2256 (published in 2013) of preferably 50°C to 160°C, more preferably 80 to 150°C, and further preferably 100 to 145°C. As the aniline point of the paraffin oil, a value is employed which is measured by the U-tube method according to JIS K 2256 (published in 2013). For example, a value may be employed which is measured by using an aniline point tester (for example, one manufactured by Tanaka Scientific Limited under the trade name of "aap-6") according to JIS K 2256 (published in 2013).

As the paraffin oil, any commercially available paraffin oil can be used as appropriate. For example, paraffin oils manufactured by JXTG Nippon Oil & Energy Corporation under the trade names of "Super Oil M Series", "Super Oil N Series" (150, 320, 460, and the like), and "300HV-S(J)"; paraffin oils manufactured by Idemitsu Kosan Co., Ltd. under the trade names of "Diana Process Oil PW90", "Diana Process Oil PW150", and "Diana Process Oil PW380"; paraffin oils manufactured by JAPAN SUN OIL COMPANY, LTD. under the trade names of "SUNPAR series (110, 115, 120, 130, 150, 2100, 2280, and the like)"; paraffin oils manufactured by ExxonMobil Corporation under the trade names of "Gargoyle Arctic series (1010, 1022, 1032, 1046, 1068, 1100, and the like)", and the like can be used as appropriate.

(Branched Multi-Layered Carbon Nanotube)

The conductive thermoplastic elastomer composition of the present invention comprises a branched multi-layered carbon nanotube. By using such a branched multi-layered carbon nanotube, when the branched multi-layered carbon nanotubes are dispersed in the composition, the multi-layered carbon nanotubes are made more likely to come into contact in the composition based on the branched structure. For this reason, conduction paths can be formed more efficiently, and the conduction paths can also be made unlikely to be cut, making it possible to more efficiently express a sufficiently high level of conductivity. In this way, since the branched multi-layered carbon nanotubes allow conduction paths to be formed more efficiently based on the structure, for example, even when the amount of the branched multi-layered carbon nanotube used (content) is reduced, it is possible to express sufficient conductivity, as compared with linear multi-layered carbon nanotube. Note that when the content of the branched multi-layered carbon nanotube in the composition is reduced, it tends to make it possible to achieve higher effects in terms of mechanical properties. For this reason, the content of the branched multi-layered carbon nanotube is preferably a lower amount from the viewpoint that it becomes possible to obtain the composition having high levels of conductivity and mechanical properties in a well-balanced manner.

In addition, in the Specification, the "branched multi-layered carbon nanotube" refer to a multi-layered carbon nanotube having a branched structure in the structure. That is, the "branched multi-layered carbon nanotube" are composed of a multi-layered carbon nanotube and have branched structure (including, for example, so-called a Y-shaped branched structure and the like) (a multi-layered carbon nanotube having branched structure). The structures of the branched multi-layered carbon nanotube can be checked by using a transmission electron microscope (TEM) or the like. In addition, the branched multi-layered carbon nanotube is not particularly limited, and known branched multi-layered carbon nanotubes (for example, those described in NPL 1 described above, commercial products, and the like) can be used as appropriate (which may have so-called multi-branched structures).

In addition, the average diameter of the branched multi-layered carbon nanotubes is preferably 0.5 to 50 nm (more preferably 1 to 40 nm). If the average diameter is less than the lower limit, the branched multi-layered carbon nanotubes are so fine that it tends to be difficult to disperse them, and it tends to be difficult to further improve the physical properties such as tensile properties. Meanwhile, if the average diameter is more than the upper limit, the branched multi-layered carbon nanotubes are so large, and become starting points of breakage, so that the tensile properties and the like rather tend to decrease. The average diameter of the branched multi-layered carbon nanotubes can be measured by conducting transmission electron microscope (TEM) measurement (for example, an average value obtained by measuring the diameters of any 20 or more of the branched multi-layered carbon nanotubes can be employed).

In addition, the average length of the branched multi-layered carbon nanotubes is preferably 1 nm to 1 mm (more preferably 1 μm to 500 μm). Moreover, the average aspect ratio ([average length]/[average diameter]) of the carbon nanotubes is preferably 10 to 20000 (more preferably 10 to 10000). if the average length or average aspect ratio is less than the lower limit, the branched multi-layered carbon nanotubes are so fine that it is difficult to disperse them, and the physical properties tend to decrease. Meanwhile, if the average length or average aspect ratio is more than the upper limit, the branched multi-layered carbon nanotubes are so large, become foreign matter, and become starting points of breakage, the tensile properties and the like tend to decrease. Note that the "average length of the branched multi-layered carbon nanotubes" mentioned herein refers to an average of lengths of the longest portions of the respective branched multi-layered carbon nanotubes, and can be measured by conducting transmission electron microscope (TEM) measurement (for example, an average value obtained by measuring the lengths of the longest portions of any 20 or more of the branched multi-layered carbon nanotubes can be employed).

The BET specific surface area of the branched multi-layered carbon nanotube is preferably 10 to 3000 $m^2/g$, more preferably 20 to 2000 $m^2/g$, and further preferably 25 to 1000 $m^2/g$. If the BET specific surface area is less than the lower limit, the conductivity tends to decrease. Meanwhile, if the BET specific surface area is more than the upper limit, mixing becomes difficult, and the dispersibility thus decreases, so that the mechanical properties tend to decrease. Note that as the BET specific surface area of the branched multi-layered carbon nanotube, a value measured by the single point BET method involving a gas adsorption method using nitrogen gas (nitrogen gas adsorption method) in accordance with DIN 66132 can be employed.

In addition, the number of layers in the branched multi-layered carbon nanotube is preferably 2 to 10 layers (more preferably 3 to 7 layers). That is, it is preferable that the branched multi-layered carbon nanotube is composed of a multi-layered carbon nanotube having a multi-layer structure of 2 to 10 layers (more preferably 3 to 7 layers). If the number of layers is more than the upper limit, the diameter is so large that it tends to be difficult to increase the dispersibility.

In addition, the method for producing such a branched multi-layered carbon nanotube is not particularly limited, and a known method can be employed as appropriate. Moreover, commercial products may be used as appropriate as the branched multi-layered carbon nanotube.

Note that in the case where the branched multi-layered carbon nanotube is introduced during the preparation of the conductive thermoplastic elastomer composition of the present invention, a mixture in which the branched multi-layered carbon nanotubes are dispersed in a polymer (so-called "masterbatch") may be used. When a mixture in which the branched multi-layered carbon nanotubes are dispersed in a polymer (masterbatch) is used to introduce the branched multi-layered carbon nanotube into the composition, it is possible to facilitate the handling of the branched multi-layered carbon nanotubes and further enhance the dispersibility of the branched multi-layered carbon nanotubes in the conductive thermoplastic elastomer composition. Note that in such a mixture (masterbatch), the polymer in which the branched multi-layered carbon nanotubes are dispersed may be selected and used as appropriate with the properties and the like of the conductive thermoplastic elastomer composition obtained by blending the masterbatch taken into consideration, and is not particularly limited. Such polymer includes, for example, polyethylene glycol, polyurethane, polycarbonate, polypropylene, polyamides such as nylon 66, nylon 12, and nylon 6, polybutylene terephthalate, polyethylenes such as LDPE, and HDPE, polyacetal, polyether ether ketone, ethylene-vinyl acetate copolymer, styrene-ethylene-butylene-styrene block copolymer, polyester-based thermoplastic elastomer, and the like.

In addition, as a mixture (masterbatch) in which the branched multi-layered carbon nanotubes are dispersed in a polymer, a commercial product may be used, or one produced by a known method may be used. Note that as commercial products of such a mixture (masterbatch), for example, those manufactured by CABOT under the trade name "ATHLOS-PEG", the trade name "ATHLOS-PU", and the like can be used as appropriate.

(Composition)

The conductive thermoplastic elastomer composition of the present invention comprises the elastomer component, the paraffin oil, and the branched multi-layered carbon nanotube.

Note that in the conductive thermoplastic elastomer composition of the present invention, the paraffin oil and the branched multi-layered carbon nanotube are used in combination in the conductive thermoplastic elastomer composition. This makes it possible to sufficiently disperse the branched multi-layered carbon nanotube with the paraffin oil serving as a lubricating component. When the branched multi-layered carbon nanotubes are sufficiently dispersed in the composition, conduction paths can be efficiently produced in the composition based on the structure, and the conduction paths can also be made unlikely to be cut, making it possible to impart a sufficiently high level of conductivity. In addition, in the conductive thermoplastic elastomer composition of the present invention, the paraffin oil facilitates deformation of the elastomer composition, making it possible to further reduce the hysteresis loss. Moreover, the paraffin oil also makes it possible to reduce the hardness of the elastomer composition itself while improving the dispersibility of the branched multi-layered carbon nanotube. The present inventors surmise that since the present invention can further increase the dispersibility while lowering the hardness as described above, it is possible to express sufficiently

high conductivity, lower hysteresis loss, and lower temperature dependence of the storage modulus.

In such a conductive thermoplastic elastomer composition, the content of the elastomer component is preferably 1 to 50% by mass, more preferably 3 to 40% by mass, further preferably 5 to 35% by mass, and particularly preferably 10 to 30% by mass, relative to the total amount of the composition (the total amount (entire amount) of all the components contained in the above conductive thermoplastic elastomer composition). If the content of the elastomer component is less than the lower limit, the rubber elasticity of the obtained composition decreases, making the mechanical properties tend to be likely to decrease. Meanwhile, if the content of the elastomer component is more than the upper limit, the amount of the branched multi-layered carbon nanotube capable of functioning as a conductive filler relatively decreases (the concentration of the branched multi-layered carbon nanotube decreases), making the conductivity of the obtained composition tend to decrease.

In addition, the content (content ratio) of the paraffin oil needs to be 1 to 65% by mass relative to the total amount of the composition (the total amount (entire amount) of all the components contained in the above conductive thermoplastic elastomer composition). If the content ratio of the paraffin oil is less than the lower limit, the amount is so small that the flexibility and flowability decrease. Meanwhile, if the content ratio of the paraffin oil is more than the upper limit, the mechanical properties decrease. From the same viewpoints, the content ratio of the paraffin oil is preferably 5 to 65% by mass, and more preferably 10 to 65% by mass. In addition, the content ratio of the paraffin oil is more preferably 25 to 60% by mass (further preferably 35 to 60% by mass, and particularly preferably 40 to 60% by mass), from the viewpoint that it is possible to further increase the flexibility, flowability, and mechanical properties, and the like.

In addition, the content (content ratio) of the branched multi-layered carbon nanotube is preferably 0.1 to 50% by mass, more preferably 0.1 to 30% by mass, further preferably 0.3 to 20% by mass, particularly preferably 0.5 to 10% by mass, and most preferably 1.0 to 5.0% by mass, relative to the total amount of the composition (the total amount (entire amount) of all the components contained in the composition). If the content of the branched multi-layered carbon nanotube is less than the lower limit, the surface resistivity and the volume resistivity tend to increase, not always making it possible to achieve a sufficiently high level of conductivity. Meanwhile, if the content of the branched multi-layered carbon nanotube is more than the upper limit, the workability of mixing the elastomer with the branched multi-layered carbon nanotube tends to decrease, which likely deteriorates the performance (conductivity in particular) of the composition obtained, and deteriorates the mechanical properties.

In addition, in the conductive thermoplastic elastomer composition of the present invention, properties depending on the application can be also imparted, as appropriate, according to the type of an elastomer component used. For example, in a conductive thermoplastic elastomer composition containing the elastomeric polymer (A) as the elastomer component, the properties stemming from the side chain (a) can be imparted to the composition, and therefore particularly the elongation at break, the tensile strength at break, and the flowability can be improved. In addition, in the conductive thermoplastic elastomer composition containing the elastomeric polymer (B) as an elastomer component, since the properties stemming from the covalent-bond cross-linking moiety in the side chain can be imparted to the composition, it is possible to particularly improve the resistance to compression set. Note that in the conductive thermoplastic elastomer composition containing the elastomeric polymer (B) as an elastomer component, properties stemming from the hydrogen-bond cross-linkable moiety (the hydrogen-bond cross-linkable moiety described in the side chain (a')) can also be imparted to the composition besides the properties stemming from the covalent-bond cross-linking moiety, it is possible to further improve the resistance to compression set while keeping the flowability (formability), also making it possible to exhibit desired properties depending on the application more efficiently by changing the type of the side chain, the type of the polymer (B), and the like.

In addition, regarding the conductive thermoplastic elastomer composition of the present invention, the conductive thermoplastic elastomer composition containing the elastomeric polymer (A) as an elastomer component and the conductive thermoplastic elastomer composition containing the elastomeric polymer (B) as an elastomer component may be produced separately, and then mixed with each other to prepare a conductive thermoplastic elastomer composition containing the elastomeric polymers (A) and (B) as elastomer components. In addition, when the conductive thermoplastic elastomer composition containing the elastomeric polymers (A) and (B) as elastomer components is produced, desired properties can also be exhibited as appropriate by changing the ratio of these components as appropriate. Moreover, in the case where the conductive thermoplastic elastomer composition of the present invention contains the elastomeric polymers (A) and (B) as elastomer components, the content ratio of the elastomeric polymer (A) and the elastomeric polymer (B) is preferably 1:9 to 9: 1, and more preferably 2:8 to 8:2, in mass ratio ([polymer (A)]:[polymer (B)]). In addition, in the case where both the side chain (a') and the side chain (b) are present in the composition, the entire amount of the side chain (a') and the entire amount of the side chain (b) satisfy preferably 1:9 to 9:1, and more preferably 2:8 to 8:2, based on the mass ratio.

The conductive thermoplastic elastomer composition of the present invention may use, as appropriate, known additives (additive components) used in the field of conductive thermoplastic elastomer compositions as necessary as long as the object of the present invention is not impaired. Such additives (additive components) include, for example, clays, polymers other than the above-described elastomer component (for example, styrene block copolymers (polymers

having a styrene block) that do not contain a chemical-bond cross-linking moiety, α-olefin-based resins (α-olefin homopolymer, α-olefin copolymer, and the like) that do not contain a chemical-bond cross-linking moiety), reinforcing agents (fillers), hydrogen-bonding reinforcing agents (fillers), fillers obtained by introducing amino groups (hereinafter simply referred to as "amino group-introduced fillers"), amino group-containing compounds other than the amino group-introduced fillers, compounds containing metal elements (hereinafter simply referred to as a "metallic salts"), maleic anhydride-modified polymers, anti-aging agents, antioxidants, pigments (dyes), plasticizers, thixotropy-imparting agents, ultraviolet absorbers, flame retardants, solvents, surfactants (including leveling agents), fillers, dispersants, dehydrating agents, corrosion inhibitors, tackiness agents, antistatic agents, and the like.

In the conductive thermoplastic elastomer composition of the present invention, a clay can be used as the additive as described above. Hence, the conductive thermoplastic elastomer composition of the present invention may further contain a clay. The clay is not particularly limited, and a known clay (for example, those described in paragraph [0146] to paragraph [0156] of JP 5918878 B, or the like) can be used as appropriate. Among such clays, at least one selected from the group consisting of a clay containing silicon and magnesium as main components and an organically modified clay is preferable from the viewpoint of high dispersibility. As such a clay, an organically modified clay is particularly preferable because a higher level of tensile stress (modulus) can be obtained.

In addition, the organically modified clay is not particularly limited, but preferably one obtained by organically modifying a clay with an organically modifying agent. Moreover, the organically modifying agent is not particularly limited, but a known organically modifying agent capable of organically modifying a clay (for example, those described in paragraph [0152] of JP 5918878 B) can be used as appropriate. In addition, as such an organically modified clay, a clay organically modified with a quaternary ammonium salt (quaternary ammonium salt-modified clay) can be preferably used from the viewpoint of single-layer dispersibility. The quaternary ammonium salt is not particularly limited, but, for example, trimethylstearylammonium salts, oleylbis(2-hydroxylethyl) methylammonium salts, dimethylstearylbenzylammonium salts, dimethyloctadecylammonium salts, and mixtures of two or more of these can be preferably used. As the quaternary ammonium salt used for organically modifying a clay, a dimethylstearylbenzylammonium salt, a dimethyl octadecyl ammonium salt, and a mixture of these can be more preferably used, and a mixture of a dimethylstearylbenzylammonium salt and a dimethyloctadecyl ammonium salt can be further preferably used, from the viewpoint of improving the tensile strength and the heat resistance.

In addition, the clay is preferably such that the clay in a single-layer morphology (single-layered clay) be present in the conductive thermoplastic elastomer composition. The presence of such a clay in a single-layer morphology can be confirmed by observing the surface of the conductive thermoplastic elastomer composition under a transmission electron microscope (TEM). Moreover, in the case where the conductive thermoplastic elastomer composition of the present invention contains a clay, when randomly selected three or more measurement points in a size of 5.63 $\mu m^2$ on the surface of the composition are observed under a transmission electron microscope (TEM), 50% or more (more preferably 70% or more, further preferably 80 to 100%, and particularly preferably 85 to 100%) of all the clay based on the number is preferably present as the single-layered clay in all the measurement points. If the ratio of the single-layered clay present is less than the lower limit, the elongation at break and the tensile strength at break tend to be lowered. Note that as the method for measuring the ratio (proportion) of such a single-layered clay present, the same method as that described in JP 5918878 B can be employed. Note that, in a case where the single-layered clay is contained at the above-described proportion (the ratio of presence) in the composition, the clay is contained more dispersedly than in a case where a multi-layered clay is directly dispersed (this is because the multi-layered clay is decomposed to form a single-layered clay), and hence the clay can be dispersed in the composition with a higher dispersibility. Thus, if the single-layered clay is contained at the above-described proportion in the composition, the higher dispersibility than in the case where the multi-layered clay is present in the composition can be obtained, so that the heat resistance and the tensile strength at break can be enhanced to higher levels. For this reason, it is more preferable that the clay in a single-layered state be contained at the above-described proportion, and this causes the clay to be more dispersed, making it possible to more efficiently improve the heat resistance and the tensile strength at break.

In addition, the conductive thermoplastic elastomer composition of the present invention is preferably such that when randomly selected three or more measurement points in a size of 5.63 $\mu m^2$ on the surface of the conductive thermoplastic elastomer composition are observed under a transmission electron microscope, 1 to 100 (more preferably 3 to 80, and further preferably 5 to 50) be dispersed per $\mu m^2$ in all the measurement points. If the number of single layers of the clay is less than the lower limit, the amount of the clay is so small that a sufficient effect tends not to be obtained. Note that the number of the single layers of the clay can be determined by obtaining a TEM image by the same method as that for measuring the ratio of presence (proportion) of the single-layered clay.

The content (content ratio) of the clay in the composition is not particularly limited, but is preferably 20 parts by mass or less, more preferably 0.01 to 10 parts by mass, further preferably 0.05 to 5 parts by mass, and particularly preferably 0.08 to 3 parts by mass, relative to 100 parts by mass of the elastomer component. If the content of the clay is less than the lower limit, the content of the clay is so small that sufficient effects tend not to be obtained. Meanwhile, if the content of the clay is more than the upper limit, the interaction (cross-linkage) is so strong that the elongation and

the strength rather tend to decrease, making it difficult to use the conductive thermoplastic elastomer composition for various applications (deteriorating the practicability).

It is preferable that the conductive thermoplastic elastomer composition of the present invention contain a styrene block copolymer (polymer having a styrene block) containing no chemical-bond cross-linking moiety as the additive (polymer other than the above-described elastomer component), from the viewpoint of improving the resistance to oil bleeding and the resistance to compression set. The "chemical-bond cross-linking moiety" mentioned herein refers to a moiety at which cross-linkage is formed by chemical bond such as hydrogen bond, covalent bon, or ionic bond. Thus, the statement "having no chemical-bond cross-linking moiety" mentioned in the present invention refers to a state in which a polymer does not have chemical bond formed by the above-described hydrogen bond, covalent bond, ionic bond, or the like. For this reason, as the styrene block copolymer having no chemical-bond cross-linking moiety, preferably used is a styrene block copolymer that neither contains a functional group (for example, a hydroxy group, a carbonyl group, a carboxyl group, a thiol group, an amide group, or an amino group) capable of forming a cross-linking point through chemical bond, nor contains a binding moiety with which polymer chains are directly cross-linked (such as a covalent bond cross-linking moiety). Moreover, the styrene block copolymer having no chemical-bond cross-linking moiety is at least a polymer having none of the above-described side chain (a), side chain (a'), side chain (b), side chain (c), or the like.

In addition, the "styrene block copolymer" mentioned herein may be a polymer having a styrene block structure at any moiety. Note that in general, a styrene block copolymer has a styrene block structure, and the moiety of the styrene block structure is flocculated to form a physically cross-linking point (physically pseudo-cross-linking point) at normal temperature, and the physically pseudo-cross-linking point decomposes when heated. Based on these properties, the styrene block copolymer is usable as a thermoplastic substance having rubber-like properties (such as elasticity) at normal temperature.

As the styrene block copolymer having no chemical-bond cross-linking moiety, a styrene block copolymer is preferable in which the styrene content is 10 to 50% by mass (more preferably 20 to 40% by mass) from the viewpoint of mechanical strength and oil absorbance. In addition, as the weight average molecular weight (Mw), the number average molecular weight (Mn), and the polydispersity index of molecular weight distribution (Mw/Mn) of the styrene block copolymer, Mw is preferably 200,000 or more and 700,000 or less (more preferably 300,000 or more and 600,000 or less), Mn is preferably 100,000 or more and 600,000 or less (more preferably 200,000 or more and 500,000 or less), and Mw/Mn is preferably 5 or less (more preferably 1 to 3), from the viewpoint of mechanical strength and oil absorbance. The glass-transition point of the amorphous portion of the styrene block copolymer is preferably -100 to 0°C (more preferably -70 to -10°C) (100°C for the polystyrene portion) from the viewpoint of the elastomeric property (the viewpoint of having a sufficient elastomeric property). As the method for measuring such various properties (Mw, Mn, and the like), the methods described in paragraph [0156] to paragraph [0163] of Japanese Unexamined Patent Application Publication No. 2017-57393 are employed. Moreover, the method for producing the styrene block copolymer having no chemical-bond cross-linking moiety is not particularly limited, and a known method can be employed as appropriate.

In addition, from the viewpoint of achieving both the rubber elasticity and the thermoplasticity, as the styrene block copolymer having no chemical-bond cross-linking moiety, styrene-isoprene-styrene block copolymer (SIS), styrene-ethylene-propylene-styrene block copolymer (SEPS), styrene-ethylene-ethylene-propylene-styrene block copolymer (SEEPS), styrene-butadiene-styrene block copolymer (SBS), styrene-ethylene-butylene-styrene block copolymer (SEBS), styrene-isoprene-butadiene-styrene block copolymer (SIBS), styrene-isobutylene-styrene copolymer, and products obtained by hydrogenating these (so-called hydrogenated products) are preferable, and SEBS and SEEPS are more preferable. One of such styrene block copolymers may be used alone, or two or more thereof may be used in combination. In addition, as the styrene block copolymer, a commercial product may be used.

Moreover, when the conductive thermoplastic elastomer composition of the present invention is caused to further contain the styrene block copolymer having no chemical-bond cross-linking moiety, the content of the styrene block copolymer having no chemical-bond cross-linking moiety is preferably 5 to 60% by mass, more preferably 7 to 45% by mass, and further preferably 10 to 30% by mass, relative to the total amount of the conductive thermoplastic elastomer composition. If the content of the styrene block copolymer having no chemical-bond cross-linking moiety is less than the lower limit, the content of the styrene block copolymer is so small that there is a tendency that sufficient effects cannot be achieved particularly in flowability, oil absorbance, and resistance to compression set. Meanwhile, if the content of the styrene block copolymer having no chemical-bond cross-linking moiety is more than the upper limit, the properties of the base structure stemming from the cross-linked elastomer (the properties stemming from the elastomer component) tend to be weak.

In addition, when the conductive thermoplastic elastomer composition of the present invention is caused to further contain the styrene block copolymer having no chemical-bond cross-linking moiety, the styrene block copolymer is preferably used such that the content of the styrene block copolymer becomes 10 to 500 parts by mass (more preferably 15 to 400 parts by mass, further preferably 20 to 300 parts by mass, particularly preferably 25 to 250 parts by mass, and most preferably 30 to 200 parts by mass) relative to 100 parts by mass of the elastomer component.

In addition, it is preferable that the conductive thermoplastic elastomer composition of the present invention further contain an α-olefin-based resin having no chemical-bond cross-linking moiety as the additive (polymer other than the above-described elastomer component) from the viewpoint of formability (flowability). As such an α-olefin-based resin having no chemical-bond cross-linking moiety, preferably used is an α-olefin-based resin that neither contains a functional group (for example, a hydroxy group, a carbonyl group, a carboxyl group, a thiol group, an amide group, or an amino group) capable of forming a cross-linking point through chemical bond, nor contains a binding moiety with which polymer chains are directly cross-linked (such as a covalent bond cross-linking moiety). Moreover, the α-olefin-based resin having no chemical-bond cross-linking moiety is at least a polymer having none of the above-described side chain (a), side chain (a'), side chain (b), side chain (c), or the like.

In addition, the "α-olefin-based resin" mentioned herein refers to an α-olefin homopolymer and an α-olefin copolymer. The "α-olefin" mentioned herein refers to an alkene having a carbon-carbon double bond at the α position (an alkene having a carbon-carbon double bond at a terminal: note that such an alkene may be linear or branched, and preferably has 2 to 20 (more preferably 2 to 10) carbon atoms), and includes, for example, ethylene, propylene, 1-butene, 1-pentene, 1-hexene, 1-heptene, 1-octene, 1-nonene, 1-decene, and the like.

As the α-olefin-based resin having no chemical-bond cross-linking moiety, for example, those described in paragraphs [0204] to [0214] of Japanese Unexamined Patent Application Publication No. 2017-57322 can be preferably used.

In addition, as the α-olefin-based resin having no chemical-bond cross-linking moiety, polypropylene, polyethylene, ethylene-propylene copolymer, and ethylene-butene copolymer are preferable from the viewpoint of compatibility with the elastomer component. Moreover, as the α-olefin-based resin having no chemical-bond cross-linking moiety, particularly, an α-olefin-based resin having a degree of crystallinity of 1% or more (polypropylene, ethylene-propylene copolymer, ethylene-butene copolymer, polyethylene, polybutene, or the like) can be preferably used. The method for producing the α-olefin-based resin having no chemical-bond cross-linking moiety is not particularly limited, and a known method can be employed as appropriate. Alternatively, as the α-olefin-based resin, a commercial product may also be used. Note that one of such α-olefin-based resins having no chemical-bond cross-linking moiety may be used alone, or two or more thereof may be used in combination.

In addition, when the conductive thermoplastic elastomer composition of the present invention is caused to contain an α-olefin-based polymer having no chemical-bond cross-linking moiety, the content of the α-olefin-based polymer is preferably 1 to 30% by mass, more preferably 2 to 25% by mass, and further preferably 3 to 20% by mass, relative to the total amount of the conductive thermoplastic elastomer composition. In addition, when the conductive thermoplastic elastomer composition of the present invention is caused to contain an α-olefin-based polymer having no chemical-bond cross-linking moiety, the α-olefin-based polymer is more preferably used such that the content of the α-olefin-based polymer becomes 250 parts by mass or less (more preferably 5 to 250 parts by mass, further preferably 10 to 225 parts by mass, particularly preferably 25 to 200 parts by mass, and most preferably 35 to 175 parts by mass) relative to 100 parts by mass of the elastomer component, since the higher effects can be obtained from the viewpoint that the flowability is improved and thereby the dispersibility of the additive is improved. Note that the α-olefin-based polymer having no chemical-bond cross-linking moiety is preferably contained in the composition, combined with the styrene block copolymer having no chemical-bond cross-linking moiety, from the viewpoint that it becomes possible to obtain a higher flowability and a higher formability.

In addition, as additives (other components) other than the clay, the styrene block copolymer having no chemical-bond cross-linking moiety, and the α-olefin-based polymer having no chemical-bond cross-linking moiety, for example, those described in paragraphs [0169] to [0174] of JP 5918878 B, or those exemplified in Japanese Unexamined Patent Application Publication No. 2006-131663 can be used as appropriate. In addition, one of such other components may be used alone, or two or more thereof may be used in combination, depending on the application. Note that the content of such other component other than the clay, the styrene block copolymer having no chemical-bond cross-linking moiety, and the α-olefin-based polymer having no chemical-bond cross-linking moiety may be changed as appropriate depending on the intended application or design, and is not particularly limited. For example, when the other component (other additive) is an anti-aging agent, an antioxidant, a pigment (dye), or a plasticizer, the content of each of these components (for each component) is preferably 20 parts by mass or less, and more preferably 0.1 to 10 parts by mass, relative to 100 parts by mass of the elastomer component. In this way, other components such as an additive can be used as appropriate depending on the intended application or design.

In addition, since the conductive thermoplastic elastomer composition of the present invention is allowed to have a higher conductivity, the volume resistivity measured in accordance with JIS K 7194 (1999) is preferably 300 Ω·cm or less, more preferably 200 Ω·cm or less, further preferably 180 Ω·cm or less, particularly preferably 150 Ω·cm or less, and most preferably 100 Ω·cm or less. Note that the lower limit value of the volume resistivity is desirably a value closer to 0 from the viewpoint of conductivity. In addition, since the conductive thermoplastic elastomer composition of the present invention is allowed to have a higher conductivity, the surface resistivity measured in accordance with JIS K 7194 (1999) is preferably 1000 Q or less, more preferably 800 Q or less, further preferably 700 Q or less, particularly

preferably 600 Q or less, and most preferably 500 Q or less. Note that the lower limit value of the surface resistivity is desirably a value closer to 0 from the viewpoint of conductivity. Note that the "volume resistivity" and the "surface resistivity" can be measured, for example, by conducting measurement by a four probe method in accordance with JIS K7194 (1999), using a low resistivity meter (ESP probe) manufactured by Nittoseiko Analytech Co., Ltd. under the trade name of "Loresta-GX MCP-T700" as a measuring device, and using, as a test piece, one of four pieces obtained by dividing a sheet of the conductive thermoplastic elastomer composition having a length of 150 mm (15 cm), a width of 150 mm (15 cm), and a thickness of 2 mm into four as a measurement sample (note that the size of this test piece is a length of 75 mm, a width of 75 mm, and a thickness of 2 mm). Note that the sheet of the conductive thermoplastic elastomer composition for forming the test piece is preferably prepared by employing the same steps as those in "Steps of Preparing Sheet for Preparing Sample", which is described in the section of Examples described later.

The conductive thermoplastic elastomer composition of the present invention is preferably used, for example, in applications such as sheets for flexible pressure sensors and temperature sensors, electromagnetic shielding materials for containers that house electronic devices such as computers and communication devices, grounding wires for electronic parts and the like, joining members used for members such as materials for preventing ignition due to sparks caused by static electricity such as triboelectricity, and the like. In addition, the conductive thermoplastic elastomer composition of the present invention is preferably used in applications such as removal of static electricity caused by ascending and descending friction in gas and oil tanks, floor materials for gunpowder factories, operating rooms, computer rooms, and the like, electromagnetic wave shielding materials and antistatic materials for preventing electrification of work tables, and the like.

The conductive thermoplastic elastomer composition of the present invention has been described above. Next, a method is described below, which can be preferably used as the method for producing the above-described conductive thermoplastic elastomer composition of the present invention.

The method for producing the conductive thermoplastic elastomer composition of the present invention is not particularly limited, and the conductive thermoplastic elastomer composition can be produced by employing the same method as a known method for producing a conductive thermoplastic elastomer composition except that components to be used to obtain the above composition are selected. In addition, the method which may be employed as the method for producing the conductive thermoplastic elastomer composition of the present invention includes, for example, a method (A) comprising: mixing an elastomeric polymer having a cyclic acid anhydride group in a side chain; the paraffin oil; the branched multi-layered carbon nanotube; and at least one raw material compound (a cross-linking agent for the elastomeric polymer) among a compound (I) that reacts with the cyclic acid anhydride group to form a hydrogen-bond cross-linkable moiety and a mixed raw material of the compound (I) and a compound (II) that reacts with the cyclic acid anhydride group to form a covalent-bond cross-linking moiety, such that the content of the paraffin oil falls within the above-described range in a finally obtained composition (the range for the content described in terms of the conductive thermoplastic elastomer composition of the present invention) (further as necessary, during the mixing, the additives (for example, a clay, a styrene block copolymer having no chemical-bond cross-linking moiety, and an $\alpha$-olefin-based polymer having no chemical-bond cross-linking moiety, and the like) may be mixed together with the above components) to react the raw material compound with the elastomeric polymer having a cyclic acid anhydride group in a side chain, thereby obtaining the conductive thermoplastic elastomer composition of the present invention.

Here, the "elastomeric polymer having a cyclic acid anhydride group in a side chain" used in the above method (A) refers to an elastomeric polymer in which a cyclic acid anhydride group is chemically stably bonded (covalently bonded) to an atom forming the main chain of the polymer, and for example, one obtained by reacting a polymer for forming main chain portions of the elastomeric polymers (A) and (B) (a polymer constituting the main chain) and a compound capable of introducing a cyclic acid anhydride group can be preferably used. Note that the compound capable of introducing a cyclic acid anhydride group includes, for example, cyclic acid anhydrides such as succinic anhydride, maleic anhydride, glutaric anhydride, and phthalic anhydride, derivatives of these. As the method for producing the elastomeric polymer having a cyclic acid anhydride group in a side chain, a normally conducted method, for example, a method that conducts graft polymerization of a cyclic acid anhydride onto a polymer for forming a main chain portion of the elastomeric polymer (A) or (B) (a polymer constituting the main chain) under normally employed condition, for example, by mixing reaction under heating or the like, and the like may be employed to produce the elastomeric polymer having a cyclic acid anhydride group in a side chain. Alternatively, as the elastomeric polymer having a cyclic acid anhydride group in a side chain, a commercial product may be used. Note that as the cyclic acid anhydride group of the elastomeric polymer having a cyclic acid anhydride group in a side chain, a succinic anhydride group, a maleic anhydride group, a glutaric anhydride group, phthalic anhydride group are preferably, and among these, a succinic anhydride group (a group generated by adding maleic anhydride) is more preferable from the viewpoint that the raw materials have a high reactivity and the raw materials can be easily obtained industrially. In addition, as the elastomeric polymer having a cyclic acid anhydride group in a side chain, maleic anhydride-modified ethylene-propylene rubber and maleic anhydride-modified ethylene-butene rubber are more preferable from the viewpoint that these have high molecular weights and high strength. Moreover, maleic anhydride-modified ethylene-vinyl acetate copolymer is more preferable from the viewpoint that it makes it possible to disperse branched multi-layered carbon nanotubes (branched CNTs), which can function as a conductive filler, at a higher level.

As the "compound (I)" used in the above method (A), the same compound as the compound that forms a hydrogen-bond cross-linkable moiety (the compound capable of introducing a nitrogen-containing heterocycle) described for the above-described conductive thermoplastic elastomer composition of the present invention can be preferably used. For example, the compound (I) may be the nitrogen-containing heterocycle itself described for the above-described conductive thermoplastic elastomer composition of the present invention, or may be a compound in which a substituent (for example, a hydroxy group, a thiol group, an amino group, or the like) that reacts with a cyclic acid anhydride group of maleic anhydride or the like is bonded to the above-described nitrogen-containing heterocycle (a nitrogen-containing heterocycle having the above-described substituent). Note that, as the compound (I), a compound that forms both a hydrogen-bond cross-linkable moiety and a covalent-bond cross-linking moiety (a compound capable of simultaneously introducing both a hydrogen-bond cross-linkable moiety and a covalent-bond cross-linking moiety) may be used (note that a side chain having both a hydrogen-bond cross-linkable moiety and a covalent-bond cross-linking moiety can be considered as a preferred mode of the side chain having a hydrogen-bond cross-linkable moiety). The compound (I) is preferably triazole, pyridine, thiadiazole, imidazole, isocyanurate, triazine, or hydantoin optionally having at least one substituent selected from hydroxy groups, thiol groups, and amino groups, more preferably triazole, pyridine, thiadiazole, imidazole, isocyanurate, triazine, or hydantoin having the above-described substituent, further preferably triazole, isocyanurate, or triazine having the above-described substituent, and particularly preferably triazole having the above-described substituent from the viewpoint that a higher reactivity can be obtained. Note that triazole, pyridine, thiadiazole, imidazole, isocyanurate and hydantoin optionally having the substituents include, for example, 4H-3-amino-1,2,4-triazole, aminopyridine, aminoimidazole, aminotriazine, aminoisocyanurate, hydroxypyridine, hydroxyethyl isocyanurate, and the like.

In addition, as the "compound (II)" used in the above method (A), the same compound as the "compound that forms a covalent-bond cross-linking moiety (the compound that forms a covalent bond)" described for the above-described conductive thermoplastic elastomer composition of the present invention can be preferably used (compounds preferred as the compound are also the same). In addition, as the compound (II), a compound that forms both a hydrogen-bond cross-linkable moiety and a covalent-bond cross-linking moiety (a compound capable of simultaneously introducing both a hydrogen-bond cross-linkable moiety and a covalent-bond cross-linking moiety) may also be used (note that a side chain having both a hydrogen-bond cross-linkable moiety and a covalent-bond cross-linking moiety can be considered as a preferred mode of the side chain having a covalent-bond cross-linking moiety). The compound (II) is preferably tris(hydroxyethyl) isocyanurate, sulfamide, or polyether polyol, more preferably tris(hydroxyethyl) isocyanurate or sulfamide, and further preferably tris(hydroxyethyl) isocyanurate, from the viewpoint of the resistance to compression set.

In addition, as the compound (I) and/or (II), it is preferable to use a compound having at least one substituent among hydroxy groups, thiol groups, amino groups, and imino groups from the viewpoint of introducing a hydrogen-bond cross-linkable moiety. Moreover, as the compound (I) and/or (II), it is preferable to use a compound that forms both a hydrogen-bond cross-linkable moiety and a covalent-bond cross-linking moiety by reacting with the cyclic acid anhydride group (a compound that can introduce both a hydrogen-bond cross-linkable moiety and a covalent-bond cross-linking moiety at the same time), because both of the hydrogen-bond cross-linkable moiety and the covalent-bond cross-linking moiety can be introduced more efficiently to the composition. As the compound that forms both a hydrogen-bond cross-linkable moiety and a covalent-bond cross-linking moiety, the aforementioned heterocycle-containing polyol, heterocycle-containing polyamine, and heterocycle-containing polythiol can be preferably used, and tris(hydroxyethyl) isocyanurate is particularly preferable among them.

The amount of the compound (I) and the compound (II) added (the total amount thereof: when only one compound is used, the amount of the one compound) is not particularly limited. In a case where active hydrogen of an amine, an alcohol, or the like is contained in the compound, the amount of the compound (I) and the compound (II) is such that the resulting amount of the active hydrogen of an amine, an alcohol, or the like in the compound is preferably 20 to 250% by mole, more preferably 50 to 150% by mole, and further preferably 80 to 120% by mole relative to 100% by mole of the cyclic acid anhydride group. In addition, the total amount of the compound (I) and the compound (II) added (when only one compound is used, the amount of the one compound) is preferably 0.1 to 10 parts by mass, more preferably 0.3 to 7 parts by mass, and further preferably 0.5 to 5.0 parts by mass, relative to 100 parts by mass of the elastomeric polymer having a cyclic acid anhydride group in a side chain.

In addition, the order or the like of adding each component in the mixing in the method (A) is not particularly limited, and an optimum method may be employed as appropriate depending on the intended design, the device to be used, and the like. Note that when a clay is used, from the viewpoint that the dispersibility of the clay is further improved, it is preferable to employ a method in which the paraffin oil, the elastomeric polymer having a cyclic acid anhydride group in a side chain, and the clay are first mixed (when required, the styrene block copolymer having no chemical-bond cross-linking moiety and/or the $\alpha$-olefin-based polymer having no chemical-bond cross-linking moiety are further mixed together) to obtain a mixture, then the raw material compound is added and mixed to the mixture to react the elastomeric polymer

having a cyclic acid anhydride group in a side chain with the raw material compound to prepare an elastomer component (a reaction product of the elastomeric polymer having a cyclic acid anhydride group in a side chain and the raw material compound), and thereafter the branched multi-layered carbon nanotube is further added and mixed to the mixture containing the elastomer component. In addition, the method for mixing each of the above components is not particularly limited, a known method or the like can be employed as appropriate, and, for example, a method that mixes the components using a roll, a kneader, an extruder, an all-purpose mixer, or the like can be employed. Note that the present inventors surmise that mixing the components in this way allows the paraffin oil to serve as a lubricating component, which achieves a state where the branched multi-layered carbon nanotubes are sufficiently dispersed in the composition during the mixing.

In addition, during the above-described mixing, an elastomer component can be prepared by reacting the elastomeric polymer having a cyclic acid anhydride group in a side chain with the raw material compound (the compound (I) and/or the compound (II)), which allows the elastomer component to be introduced in the composition. From the viewpoint of reacting the elastomeric polymer having a cyclic acid anhydride group in a side chain with the raw material compound (the compound (I) and/or the compound (II)) (ring-opening of the cyclic acid anhydride group), the temperature condition in mixing the elastomeric polymer having a cyclic acid anhydride group in a side chain and the raw material compound only has to be adjusted to a temperature that allows these reactions, and is not particularly limited. The temperature condition may be set to, for example, 100 to 250°C (more preferably 120 to 230°C) depending on the types of the compound and the cyclic acid anhydride group.

In this way, it is possible to obtain the conductive thermoplastic elastomer composition of the present invention by employing the above method (A) to mix the components (when required, further mix the additive such as the clay together) to react the elastomeric polymer having a cyclic acid anhydride group in a side chain and the raw material compound.

Note that the method for producing the conductive thermoplastic elastomer composition is not limited to the above method (A), any method can be employed as appropriate as long as the method can add the elastomer component, the paraffin oil, and the branched multi-layered carbon nanotube to the composition (when required, to further add the additive to the composition together). As the method for producing the conductive thermoplastic elastomer composition, for example, the same method as the method described in paragraphs [0203] to [0261] of WO 2018/096910 A may be employed except that the "branched multi-layered carbon nanotube" is used instead of the "carbon-based filler having a BET specific surface area of 50 $m^2/g$ or more" used in the method described in the paragraphs of WO 2018/096910 A and the clay used in the method described in the paragraphs of WO 2018/096910 A does not necessarily have to be used.

[Examples]

Hereinafter, the present invention is described more specifically on the basis of Examples and Comparative Examples; however, the present invention is not limited to Examples below.

First, methods for evaluating properties of conductive thermoplastic elastomer compositions obtained in Examples and Comparative Examples are described.

<Steps of Preparing Sheet for Preparing Sample>

A sheet (sheet for preparing a sample) to be used for evaluating the properties of the composition was prepared as described below by using each of the conductive thermoplastic elastomer compositions obtained in Examples and Comparative Examples. Specifically, first, a pressure press machine with a water-cooling function was used to heat to 200°C. Then, 42 g of the conductive thermoplastic elastomer composition was put in a mold having a size of a length of 15 cm, a width of 15 cm, and a thickness of 2 mm, and was heated (preheated) at 200°C for 3 minutes before pressurization, and was subsequently pressurized (hot pressed) under conditions of a temperature: 200°C, a used pressure: 18 MPa, and a pressurizing time: 5 minutes. Thereafter, water-cooling cold pressing was further conducted under conditions of a used pressure: 18 MPa, and pressurizing time: 2 minutes. Then, the pressed conductive thermoplastic elastomer composition was taken out of the mold to prepare a sheet (sheet for preparing a sample) having a thickness of 2 mm.

<Measurement of 100% Modulus>

For each of the conductive thermoplastic elastomer compositions obtained in Examples and Comparative Examples, the sheet for preparing a sample obtained as described above was used, and a test piece (measurement sample) having a No. 3 dumbbell shape was punched out from the sheet, and subjected to a tensile test under the condition of a tensile speed of 500 mm/min in accordance with JIS K6251 (published in 2010) to measure the 100% modulus ($M_{100}$) [unit: MPa] at room temperature (25°C).

<Measurement of Surface Resistivity and Volume Resistivity>

For each of the conductive thermoplastic elastomer compositions obtained in Examples and Comparative Examples, the sheet for preparing a sample obtained as described above was divided into four to prepare a test piece (measurement sample) having a length of 75 mm, a width of 75 mm, and a thickness of 2 mm. The test piece was subjected to measurement by a four probe method in accordance with JIS K7194 (1999), using a low resistivity meter (ESP probe) manufactured by Nittoseiko Analytech Co., Ltd. under the trade name of "Loresta-GX MCP-T700" as a measuring device as a measuring device to measure the surface resistivity and the volume resistivity of each conductive thermoplastic elastomer composition. Note that in the measurement, conditions of a test environment temperature: 23±2°C, a test environment humidity: 50±5%RH (relative humidity), and an applied current: 0.1 μA to 1 mA were employed, and 4 probes were arranged linearly at equal intervals (an interval between adjacent two probes: 5 mm) relative to the above test piece (measurement sample) to conduct the measurement.

<Measurement of Hysteresis Loss>

For each of the conductive thermoplastic elastomer compositions obtained in Examples and Comparative Examples, the sheet for preparing a sample obtained as described above was used, and a test piece (measurement sample) having a length of 5 mm, a width of 5 mm, and a thickness of 2 mm was cut out from the sheet. The test piece was set in a measuring device (a thermo-mechanical analyzer "model number: TMA7100E" manufactured by Hitachi High-Tech Science Corporation) (note that the test piece was set in the device such that the pressure applied to the test piece became 50 mN, and the thickness of the test piece became about 1.7 mm to 1.8 mm after set in the device), and thereafter, steps of conducting compression (pressurization) and release (depressurization) were conducted repeatedly three times under measurement conditions described below. Note that in every step, the pressurization was conducted from the start of the pressurization (setting pressure (initial pressure) 50 mN) to the maximum pressure of 1200 N at a compression rate described below, and thereafter, a graph of a stress-compression amount curve (stress-strain curve) representing a relation between the stress measured after the release and the compression amount (strain amount: %) until the stress became 50 mN (note that in each time, the compressed amount (%) was measured based on the thickness of the test piece when set in the device, and the release was conducted until the measured stress became 50 mN). Then, the area of a region surrounded by the stress-compression amount curve in each graph was calculated by using the graph of the stress-compression amount curve in each time, and an average value of the areas (an average value of three times) was employed as the value of the hysteresis loss. Note that it is also understood that the smaller the value of the hysteresis loss (the average value of the three times), the higher the recovery rate.

[Measurement Conditions]

The measurement temperature: 25°C
The measurement interval for measuring the relation between the stress and the compression amount (the sampling time): 0.5 sec
The ground contact area: 9.6 $mm^2$
The compression stress: 50 mN (the initial pressure and the pressure at the release) to 1200 mN (the maximum pressure in the compression)
The compression rate: 460 mN/min.

<Temperature Dependence of Storage Modulus (E')>

For each of the conductive thermoplastic elastomer compositions obtained in Examples and Comparative Examples, the sheet for preparing a sample obtained as described above was used, and a test piece (measurement sample) having a width of 5 mm, a length of 20 mm, and a thickness of 2 mm was punched out from the sheet, and the storage modulus (E' [unit: Pa]) of the test piece (sheet) was measured by using a dynamic mechanical analyzer (DMA measuring device: manufactured by UBM under the trade name of "Rheogel-E4000"), setting the test piece in the device, applying strain to the test piece under strain measurement conditions of measurement interval: 2°C, measurement frequency: 10 Hz, measurement mode: tensile mode, and dynamic amplitude: 0.1% while increasing the temperature from -50 to 200°C at a rate of temperature rise of 2°C/min, such that strain is generated in the longitudinal direction of the test piece (the direction of the side having a length of 20 mm of the test piece) during the measurement. Then, the difference (ΔlogE') between the value of logE' at 0°C and the value of logE' at 50°C was obtained by using the following calculation formula:

$$[\Delta \log E'] = [\log E' \text{ at } 0°C] - [\log E' \text{ at } 50°C].$$

Note that it is understood that the smaller the value of the difference (ΔlogE'), the lower the temperature dependence of the storage modulus.

(Example 1)

First, 15 g of styrene-ethylene-butylene-styrene block copolymer (manufactured by Kraton Corporation under the trade name of "G1633": hereinafter simply referred to as "SEBS" in some cases) was put into a pressure kneader. Thereafter, 30 g of a paraffin oil (manufactured by JXTG Nippon Oil & Energy Corporation under the trade name of "300HV-S(J)") was dropwise added to the SEBS while the SEBS was being kneaded under the conditions of a temperature of 200°C and a rotation speed of 20 rpm in the pressure kneader. Subsequently, 10.0 g of maleic anhydride-modified ethylene-vinyl acetate copolymer (manufactured by Arkema under the trade name of "OrevacT9305": hereinafter simply referred to as "maleated EVA" in some cases) and 0.17 g of an anti-aging agent (manufactured by ADEKA Corporation under the trade name of "AO-50") were further put into the pressure kneader, followed by masticating under conditions of a temperature of 200°C and a rotation speed of 20 rpm for 2 minutes to obtain a first mixture (a mixture of the SEBS, the paraffin oil, the maleated EVA, and the anti-aging agent). Note that, the first mixture was plasticized in the above steps.

Subsequently, 0.059 g of tris(hydroxyethyl) isocyanurate (manufactured by Nissei Corporation, Ltd. under the trade name of "TANAC P") was added to the first mixture, followed by mixing at a temperature of 200°C, at a rotation speed of 20 rpm, for 6 minutes to prepare a thermoplastic elastomer composition (a precursor of a conductive thermoplastic elastomer composition).

Thereafter, 1.42 g of branched multi-layered carbon nanotubes (manufactured by CABOT under the trade name of "ATHLOS-PEG": a product supporting polyethylene glycol (PEG) in a proportion of 97% by mass: multi-layered carbon nanotubes having branched structures having an average diameter of 14±4 nm and an average length of 70 μm) were added to the thermoplastic elastomer composition (the precursor of the conductive thermoplastic elastomer composition) in the pressure kneader, mixed under conditions of 200°C and a rotation speed of 100 rpm for 6 minutes, and then released from the pressure kneader to obtain a conductive thermoplastic elastomer composition. Note that since the main chain of the elastomeric polymer (reaction product of the maleated EVA and the tris(hydroxyethyl) isocyanurate) in the composition is ethylene-vinyl acetate copolymer (EVA), it is obvious that the elastomeric polymer is a polymer having a glass-transition point of 25°C or below. In addition, the mass ratio of each component used in production of the conductive thermoplastic elastomer composition (the ratio of each component in the case where the amount of maleated EVA used is converted to 100 parts by mass) is shown in Table 1. Note that regarding the compositions shown in Table 1, the sign "-" means that the content (parts by mass) of the corresponding component is 0.

(Examples 2 and 3)

Conductive thermoplastic elastomer compositions were each obtained in the same manner as in Example 1 except that the amount of each component used in the production of the conductive thermoplastic elastomer composition was changed such that the mass ratio of each component became the ratio shown in Table 1.

(Example 4)

A conductive thermoplastic elastomer composition was obtained in the same manner as in Example 1 except that a step of adding an organically modified clay (manufactured by HOJUN Co., Ltd. under the trade name of "S-BEN WX") to the first mixture, followed by mixing for 4 minutes, was conducted before the step of adding tris(hydroxyethyl) isocyanurate to the first mixture was conducted, and the amount of each component used in the production of the conductive thermoplastic elastomer composition was changed such that the mass ratio of each component became the ratio shown in Table 1. Note that the amount of the organically modified clay used was 0.01 g.

(Examples 5 and 6)

Conductive thermoplastic elastomer compositions were each obtained in the same manner as in Example 1 except that the type of the branched multi-layered carbon nanotubes was changed to use trade name "ATHLOS-PU" manufactured by CABOT (a product supporting polyurethane (PU) in a proportion of 97% by mass: multi-layered carbon nanotubes having branched structures having an average diameter of 14±4 nm and an average length of 70 μm) instead of trade name "ATHLOS-PEG" manufactured by CABOT, and the amount of each component used in the production of the conductive thermoplastic elastomer composition was changed such that the mass ratio of each component became

the ratio shown in Table 1.

(Comparative Example 1)

A conductive thermoplastic elastomer composition was obtained in the same manner as in Example 1 except that carbon black (manufactured by Lion Specialty Chemicals Co., Ltd. under the trade name of "KETJENBLACK EC200L") was used instead of the branched multi-layered carbon nanotubes, and further the amount of each component used in the production of the conductive thermoplastic elastomer composition was changed such that the mass ratio of each component became the ratio shown in Table 1.

(Comparative Example 2)

A conductive thermoplastic elastomer composition was obtained in the same manner as in Example 1 except that linear multi-layered carbon nanotubes having no branched structure (manufactured by Sigma-Aldrich: sometimes referred to simply as "non-branched multi-layered carbon nanotubes") were used instead of the branched multi-layered carbon nanotubes, and further the amount of each component used in the production of the conductive thermoplastic elastomer composition was changed such that the mass ratio of each component became the ratio shown in Table 1.

[Property Evaluation of Conductive Thermoplastic Elastomer Composition]

Table 1 presents the values measured, for the properties (100% modulus, surface resistivity, volume resistivity, hysteresis loss, and temperature dependence of storage modulus (E')) of the conductive thermoplastic elastomer compositions obtained in Examples 1 to 6 and Comparative Examples 1 and 2, based on the above-mentioned methods for evaluating properties. Note that although Table 1 presents the compositions of the respective compositions, regarding the compositions, the sign: "-" shows that the content (parts by mass) of the corresponding component is 0.

[Tabel 1]

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| | Elastomer component | Elastomeric polymer having a cyclic acid anhydride group in a side chain | Maleated EVA (manufactured by Arkema under the trade name of "OrevacT9305") | 100 | 100 | 100 | 100 | 100 | 100 | 100 | 100 |
| | | Cross-linking agent (a compound for forming a cross-linking moiety) | Tris(hydroxyethyl) isocyanurate (manufactured by Nissei Corporation, Ltd. under the trade name of "TANAC P") | 0.59 | 0.59 | 0.59 | 0.59 | 0.59 | 0.59 | 0.59 | 0.59 |
| | Paraffin oil | | Manufactured by JXTG Nippon Oil & Energy Corporation under the trade name of "300HV-S (J)" | 300.0 | 300.0 | 300.0 | 300.0 | 300.0 | 300.0 | 300.0 | 300.0 |

(continued)

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Composition (parts by mass) | Carbon-based material | Branched multi-layered carbon nanotube | Manufactured by CABOT under the trade name of "ATHLOS-PEG" | 14.2 | 17.1 | 20.0 | 14.2 | - | - | - | - |
| | | | Manufactured by CABOT under the trade name of "ATHLOS-PU" | - | - | - | - | 17.1 | 20.0 | - | - |
| | | Carbon black (a component for comparison) | Manufactured by Lion Specialty Chemicals Co., Ltd. under the trade name of "KETJENBLACK EC200L" | - | - | - | - | - | - | 83 | - |
| | | Non-branched multi-layered carbon nanotube (a component for comparison) | Manufactured by Sigma Aldrich | - | - | - | - | - | - | - | 14.6 |
| | Styrene block copolymer having no chemical-bond cross-linking moiety | | SEBS (manufactured by Kraton Corporation under the trade name of "G1633") | 150 | 150 | 150 | 150 | 150 | 150 | 150 | 150 |
| | Anti-aging agent | | Manufactured by ADEKA Corporation under the trade name of "AO-50" | 1.70 | 1.71 | 1.72 | 1.70 | 1.71 | 1.72 | 1.91 | 1.91 |

(continued)

| | | | Example 1 | Example 2 | Example 3 | Example 4 | Example 5 | Example 6 | Comparative Example 1 | Comparative Example 2 |
|---|---|---|---|---|---|---|---|---|---|---|
| | Clay | Organically modified clay (manufactured by HOJUN Co., Ltd. under the trade name of "S-BEN WX") | - | - | - | 0.1 | - | - | - | - |
| | Total amount | | 566.5 | 569.4 | 572.3 | 566.6 | 569.4 | 572.3 | 635.5 | 567.1 |
| Content ratio of carbon-based material relative to the total amount of composition (mass %) | | | 2.51 | 3.00 | 3.49 | 2.51 | 3.00 | 3.49 | 13.06 | 2.57 |
| Results of evaluation | 100% Modulus (unit: MPa) | | 1.09 | 1.42 | 1.41 | 1.09 | 0.87 | 1.01 | 0.62 | 0.79 |
| | Surface resistivity (unit: Ω) | | 516 | 291 | 146 | 513 | 719 | 306 | 686 | >10000 |
| | Volume resistivity (unit: Ω·cm) | | 103 | 58 | 29 | 99 | 144 | 61 | 137 | >10000 |
| | Hysteresis loss (an average value of three times) | | 13.86 | 14.77 | 16.90 | 13.62 | 13.96 | 14.44 | 19.52 | 20.52 |
| | Temperature dependence (ΔlogE') of the storage modulus (E') | | 0.68 | 0.67 | 0.64 | 0.66 | 0.55 | 0.55 | 0.69 | 0.72 |

As is apparent from the results presented in Table 1, it was found that all of the conductive thermoplastic elastomer compositions obtained in Examples 1 to 6 each had a 100% modulus of 0.87 MPa or more, while the conductive thermoplastic elastomer compositions obtained in Comparative Examples 1 to 2 each had a 100% modulus of 0.79 MPa or less. It was thus confirmed that the 100% modulus of each of the conductive thermoplastic elastomer compositions obtained Examples 1 to 6 had a higher value than those of the conductive thermoplastic elastomer compositions obtained in Comparative Examples 1 to 2.

In addition, all of the conductive thermoplastic elastomer compositions obtained in Examples 1 to 6 using the branched multi-layered carbon nanotubes each had a surface resistivity of 719 Q or less and a volume resistivity of 144 Ω·cm or less. Meanwhile, the conductive thermoplastic elastomer composition obtained in Comparative Example 1 using carbon black had a surface resistivity of 686 Q and a volume resistivity of 137 Ω·cm or less. In contrast, the conductive thermoplastic elastomer composition obtained in Comparative Example 2 using non-branched multi-layered carbon nanotubes had a surface resistivity of a value exceeding 10000 Ω (>10000 Ω), and further had a volume resistivity of a value exceeding 10000 Ω·cm (>10000 Ω·cm) as well. It was found from these results that the conductive thermoplastic elastomer compositions obtained in Examples 1 to 6 and the conductive thermoplastic elastomer composition obtained in Comparative Example 1 were capable of achieving a sufficiently high level of conductivity. Note that the conductive thermoplastic elastomer compositions obtained in Examples 1 to 4 and 6 had values of the surface resistivity and volume resistivity lower than those of the conductive thermoplastic elastomer composition obtained in Comparative Example 1, and it was found that the conductive thermoplastic elastomer compositions obtained in Examples 1 to 4 and 6 had conductivities higher than that of the conductive thermoplastic elastomer composition obtained in Comparative Example 1. In addition, with the fact that the content ratio of the carbon-based material (branched multi-layered carbon nanotubes or carbon black) in the composition is different between Examples 1 to 6 and Comparative Example 1 (the content ratio of the carbon-based material was 3.5% by mass or less in Examples 1 to 6, and about 13% by mass in Comparative Example 1) taken into consideration, it is apparent that when branched multi-layered carbon nanotubes are used (Examples 1 to 6), a higher effect can be obtained in terms of conductivity.

In addition, all of the conductive thermoplastic elastomer compositions obtained in Examples 1 to 6 each had a hysteresis loss of 16.90 or less, while the conductive thermoplastic elastomer compositions obtained in Comparative Examples 1 to 2 each had a hysteresis loss of 19.52 or more. From the results of comparing values of hysteresis loss, when branched multi-layered carbon nanotubes are used (Examples 1 to 6), a higher recovery rate can be obtained.

Furthermore, all of the conductive thermoplastic elastomer compositions obtained in Examples 1 to 6 each had a ΔlogE' regarding the temperature dependence of storage modulus (E') of 0.68 or less, which was lower than those of the conductive thermoplastic elastomer compositions obtained in Comparative Examples 1 to 2. From the result of comparing the values of ΔlogE', it was found that when branched multi-layered carbon nanotubes are used (Examples 1 to 6), the temperature dependence of the storage modulus (E') of the composition becomes lower, that is, a change in hardness due to a change in temperature becomes smaller.

[Industrial Applicability]

As described above, the present invention makes it possible to provide a conductive thermoplastic elastomer composition that can have a sufficiently high level of conductivity and higher tensile stress, can reduce hysteresis loss, and also can reduce a temperature dependence of storage modulus.

Hence, the conductive thermoplastic elastomer composition of the present invention not only has a sufficiently high level of conductivity but also has a sufficiently high tensile stress, a sufficiently small hysteresis loss, and a sufficiently low temperature dependence of storage modulus. Therefore, the conductive thermoplastic elastomer composition of the present invention can be preferably used, for example, in applications such as sheets for flexible pressure sensors and temperature sensors, electromagnetic shielding materials for containers that house electronic devices such as computers and communication devices, grounding wires for electronic parts and the like, joining members used for members such as materials for preventing ignition due to sparks caused by static electricity such as triboelectricity, and the like. In addition, the conductive thermoplastic elastomer composition of the present invention is also useful, for example, for materials for producing products to be used in applications such as removal of static electricity caused by ascending and descending friction in gas and oil tanks; floor materials for gunpowder factories, operating rooms, computer rooms, and the like; electromagnetic wave shielding materials and antistatic materials for preventing electrification of work tables and the like; and the like.

## Claims

**1.** A conductive thermoplastic elastomer composition comprising:

at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
a paraffin oil; and
a branched multi-layered carbon nanotube, wherein
a content ratio of the paraffin oil is 1 to 65% by mass relative to a total amount of the composition.

**2.** The conductive thermoplastic elastomer composition according to claim 1, wherein
a content ratio of the branched multi-layered carbon nanotube is 0.1 to 50% by mass relative to the total amount of the composition.

## INTERNATIONAL SEARCH REPORT

International application No. PCT/JP2021/024187

**A. CLASSIFICATION OF SUBJECT MATTER**

C08L 101/02(2006.01)i; C08K 3/04(2006.01)i; C08K 5/01(2006.01)i; C08K 7/00(2006.01)i; C08L 15/00(2006.01)i; C08L 101/00(2006.01)i
FI: C08L101/02; C08K3/04; C08K5/01; C08K7/00; C08L101/00 ZNM; C08L15/00

According to International Patent Classification (IPC) or to both national classification and IPC

**B. FIELDS SEARCHED**

Minimum documentation searched (classification system followed by classification symbols)
C08L1/00-101/14; C08K3/00-13/08; C01B32/00-32/991

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2008-088194 A (THE YOKOHAMA RUBBER CO., LTD.) 17 April 2008 (2008-04-17) entire text | 1-2 |
| A | JP 2018-083894 A (JXTG NIPPON OIL & ENERGY CORPORATION) 31 May 2018 (2018-05-31) entire text | 1-2 |
| A | JP 2003-342480 A (SUMITOMO RUBBER INDUSTRIES, LTD.) 03 December 2003 (2003-12-03) entire text | 1-2 |
| A | US 2016/0272793 A1 (SOUCY TECHNO INC.) 22 September 2016 (2016-09-22) entire text | 1-2 |
| A | JP 2007-512658 A (GENERAL ELECTRIC CO.) 17 May 2007 (2007-05-17) entire text | 1-2 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>30 August 2021 (30.08.2021) | Date of mailing of the international search report<br>07 September 2021 (07.09.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application no.
PCT/JP2021/024187

| Patent Documents referred in the Report | Publication Date | Patent Family | Publication Date |
|---|---|---|---|
| JP 2008-088194 A | 17 Apr. 2008 | (Family: none) | |
| JP 2018-083894 A | 31 May 2018 | US 2019/0385763 A1<br>entire text<br>WO 2018/096910 A1<br>EP 3546526 A1<br>CN 110234714 A | |
| JP 2003-342480 A | 03 Dec. 2003 | (Family: none) | |
| US 2016/0272793 A1 | 22 Sep. 2016 | WO 2015/054779 A1<br>CA 2925928 A1 | |
| JP 2007-512658 A | 17 May 2007 | JP 2006-526058 A<br>US 2005/0029498 A1<br>entire text<br>US 2004/0211942 A1<br>WO 2005/015574 A1<br>WO 2004/097852 A1<br>EP 1654740 A1<br>EP 1631970 A1<br>KR 10-2006-0060682 A<br>CN 1864233 A<br>KR 10-2006-0008928 A<br>CN 1813316 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018096910 A
- JP 5918878 B
- JP 2017057393 A
- JP 2017057322 A
- JP 2006131663 A


### Non-patent literature cited in the description


- **BEATE KRAUSE et al.** Comparative study of singlewalled, multiwalled, and branched carbon nanotubes melt mixed in different thermoplastic matrices. *Polymer,* 2018, vol. 159, 75-89